# EUROPEAN PATENT APPLICATION

(11) **EP 4 177 307 A1**
(43) Date of publication of application: **10.05.2023**
(21) Application number: 21206902.5
(22) Date of filing: 08.11.2021
(51) Int. Cl.: C08K 9/04, C08K 9/06, C09C 1/02, C08K 3/22, C08K 3/26

(54) **POLYCARBONATE COMPOSITION COMPRISING A SURFACE-TREATED CALCIUM CARBONATE-CONTAINING MATERIAL**

(71) Applicant: Omya International AG, 4665 Oftringen (CH)
(72) Inventor: BARADEL, Franck, 4800 Zofingen (CH); WELKER, Matthias, 68220 Hésingue (FR); BARANGER, Joris, 68680 Kembs (FR)
(74) Representative: Maiwald GmbH

(57) **Abstract**

The invention provides a polycarbonate composition comprising a) a polycarbonate resin, b) a surface-treated calcium carbonate-containing material, wherein the surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof, c) optionally titanium dioxide, d) optionally one or more additives. Further, the invention provides an article comprising the polycarbonate composition of the invention and a process for preparing the polycarbonate composition of the invention. The invention also provides a use of a surface-treated calcium carbonate-containing material as defined in the application as a filler for a polycarbonate composition. The invention further provides a surface-treated calcium carbonate-containing material, wherein the surface-treated calcium carbonate-containing material is obtained by surface-treating a calcium carbonate-containing material with at least one hydrophobizing agent selected from the group consisting of carboxylic acid- and/or anhydride-functional polysiloxanes.

## Description

### TECHNICAL FIELD

The present invention relates to polycarbonate compositions and processes for preparing the same. Furthermore, the present invention relates to the use of calcium carbonate-containing materials as filler for polycarbonate compositions.

### BACKGROUND OF INVENTION

Fillers are usually added to polymers to impart specific mechanical and/or optical properties to the polymer or to substitute more expensive polymer raw material.

Untreated calcium carbonate filler is not very well compatible with polycarbonate. Attempts to mix and process untreated calcium carbonate and polycarbonate lead to polycarbonate compositions which are difficult to process and have poor mechanical properties such as a decreased impact resistance, elongation at break, unstable melt flow etc. Furthermore, the optical properties of polycarbonate are negatively effected in that the filler polymer often shows a change to a yellowish color and includes bubble-like defects. Appearance of a yellowish color are particularly problematic for white polycarbonate compositions such as TiO₂-filled polycarbonate compositions which are important for several industries such as in the automotive sector.

In view of the foregoing, there is a continuous need in the art for new or improved polycarbonate compositions which are filled with calcium carbonate-containing material. There is also a need in the art for polycarbonate compositions which are filled with calcium carbonate-containing material, and which have improved mechanical and/or optical properties such as a decreased yellowness. Further, calcium carbonate-containing materials are required in the art which are suitable for use in polycarbonate compositions.

One object of the present invention is to provide an improved polycarbonate composition comprising calcium carbonate-containing material, and a process for preparing such material.

### SUMMARY OF INVENTION

In one aspect of the invention, a polycarbonate composition is provided. The polycarbonate composition comprises
a) a polycarbonate resin,
b) a surface-treated calcium carbonate-containing material, wherein the surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof,
c) optionally titanium dioxide,
d) optionally one or more additives.

In another aspect of the present invention, an article is provided which comprises the polycarbonate composition according to the invention.

In another aspect of the present invention, a process for preparing a polycarbonate composition according to the invention is provided. The process comprises the steps of:
i) surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof, to obtain a surface-treated calcium carbonate-containing material;
ii) compounding the surface-treated calcium carbonate-containing material with a polycarbonate resin, and optionally with one or more additives and/or titanium dioxide, to obtain a polycarbonate composition;
iii) extruding the polycarbonate composition.

Yet another aspect of the invention relates to the use of a surface-treated calcium carbonate-containing material as a filler for a polycarbonate composition, wherein the surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof.

Yet another aspect of the invention relates to a surface-treated calcium carbonate-containing material, wherein the surface-treated calcium carbonate-containing material is obtained by surface-treating a calcium carbonate-containing material with at least one hydrophobizing agent selected from the group consisting of carboxylic acid- and/or anhydride-functional polysiloxanes.

The inventors have found that a calcium carbonate-containing material which has been surface-treated by at least one hydrophobizing agent, which is selected from the group consisting of aliphatic-substituted succinic anhydrides, carboxylic acid- and/or anhydride-functional polysiloxanes, and mixtures thereof, is particularly useful as a filler for preparing a polycarbonate composition. In particular, it has been found that addition of the surface-treated calcium carbonate filler as defined herein to a polycarbonate composition can improve or at least maintain the properties of the polycarbonate composition, compared to the use of an untreated calcium carbonate or a calcium carbonate which has been surface treated by a different hydrophobizing agent such as linear C₁₂-C₂₀ unsaturated fatty acids (e.g. a mixture of stearic acid and palmitic acid). It has been found by the inventors that the addition of the surface-treated calcium carbonate-containing material can improve the mechanical properties of the polycarbonate such as its impact resistance and elongation at break compared to an untreated calcium carbonate or a calcium carbonate which has been surface treated by a different hydrophobizing agent. During preparation, the melt flow rate of the inventive polycarbonate composition remains stable. Further, less or no (yellow) coloration of the polycarbonate composition is observed when using the surface-treated calcium carbonate-containing fillers defined herein compared to other calcium carbonate fillers. Therefore, the surface-treated calcium carbonate-containing material as defined herein can be used as a white pigment for a polycarbonate composition, optionally in combination with titanium dioxide as an additional white pigment or as a substitute white pigment for titanium dioxide.

According to one embodiment, the polycarbonate composition comprises the polycarbonate resin in an amount of at least 50 wt.%, preferably at least 75 wt.%, and more preferably at least 85 wt.%, based on the total weight of the polycarbonate composition, and/or the polycarbonate resin is a poly(bisphenol A carbonate), optionally having a melt flow rate according to ISO 1133 (300 °C/1.2 kg) in the range of 1 to 50 g/10 min.

According to one embodiment, the polycarbonate composition comprises, based on the total weight of the polycarbonate composition:
a) at least 50 wt.% of the polycarbonate resin,
b) from 0.1 to 12 wt.% of the surface-treated calcium carbonate-containing material,
c) optionally from 0.1 to 10 wt.% of titanium dioxide, and
d) optionally from 0.1 to 10 wt.% of additives.

According to one embodiment, the polycarbonate composition comprises the surface-treated calcium carbonate-containing material in an amount in the range of 0.1 to 12 wt.%, preferably 0.5 to 9.0 wt.%, and more preferably 1.0 to 6.0 wt.%, based on the total weight of the composition.

According to one embodiment, the aliphatic-substituted succinic anhydrides are alkenyl mono-substituted succinic anhydrides, and preferably C₂-C₃₀-alkenyl mono-substituted succinic anhydrides.

According to one embodiment, the carboxylic acid- and/or anhydride-functional polysiloxanes have a structure according to Formula (I): 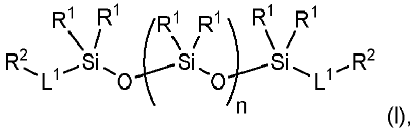 wherein
R¹ is each independently selected from hydrogen, optionally substituted alkyl groups and optionally substituted aryl groups,
R² is each independently selected from a carboxyl group and anhydride groups,
L¹ is a linking moiety,
m is an integer from 1 to 25, and
n is an integer from 1 to 1000.

According to one embodiment, the amount of the at least one hydrophobizing agent used for surface-treating the calcium carbonate-containing material is in the range of 0.1 to 10.0 wt.%, preferably 0.1 to 6.0 wt.%, more preferably 0.3 to 5.0 wt.%, and even more preferably 0.5 to 3.0 wt.%, based on the weight of the calcium carbonate-containing material, or the amount of the at least one hydrophobizing agent used for surface-treating the calcium carbonate-containing material is in the range of 0.1 to 0.4 wt.% / m² (BET specific surface area of calcium carbonate-containing material), based on the weight and the BET specific surface area of the calcium carbonate-containing material.

According to one embodiment, the surface-treated calcium carbonate-containing material has a moisture pick-up susceptibility of below 2.0 mg (H₂O) / g (material), and preferably below 1.2 mg (H₂O) / g (material), and/or the surface-treated calcium carbonate-containing material has a residual moisture content of at most 0.5 wt.%, preferably of at most 0.3 wt.%, as determined by TGA analysis.

According to one embodiment, the calcium carbonate-containing material has a weight-median particle size dso in the range of 0.1 to 15 micrometers, preferably 0.3 to 5 micrometers, and more preferably 0.5 to 3 micrometers, and/or the calcium carbonate-containing material has a weight-based top cut particle size d₉₈ in the range of 0.5 to 40 micrometers, preferably 1.0 to 20 micrometers, and more preferably 1.0 to 10 micrometers.

According to one embodiment, the calcium carbonate-containing material is selected from the group consisting of natural ground calcium carbonate, precipitated calcium carbonate, and mixtures thereof, preferably the calcium carbonate-containing material is a natural ground calcium carbonate, more preferably the natural ground calcium carbonate is selected from marble, limestone and mixtures thereof, and most preferably the natural ground calcium carbonate is marble.

According to one embodiment, the polycarbonate composition comprises titanium dioxide in an amount of 0.1 to 10 wt.%, and preferably 1 to 5 wt.%, based on the total weight of the polycarbonate composition, and optionally wherein the titanium dioxide is a rutile-type titanium dioxide which is optionally surface-treated with one or more aluminium compounds and/or one or more polysiloxane compounds.

According to one embodiment, the surface-treated calcium carbonate is used for improving the mechanical and/or optical properties of the polycarbonate composition,
and preferably is used for one or more of the following :
increasing the maximum strength according to ISO 527,
increasing the elongation at break according to ISO 527,
increasing the impact resistance according to ISO 179,
reducing the melt flow rate according to ISO 1133 (measured at 260°C with a load of 2.16 kg) decreasing the b* value according to DIN 6174, and
increasing the L* value according to DIN 6174,
when compared to the use of a calcium carbonate-containing material which is not surface-treated, under otherwise identical conditions, and/or when compared to the use of a surface-treated calcium carbonate-containing material which is obtained by surface-treating the calcium carbonate-containing material with a hydrophobizing agent other than the at least one hydrophobizing agent as defined in the claims, under otherwise identical conditions.

According to one embodiment, the carboxylic acid- and/or anhydride-functional polysiloxanes are carboxylic acid-functional polysiloxanes selected from the group of carboxylalkyl-terminated polysiloxanes, preferably from the group of carboxyl-C₁-C₂₀-alkyl-terminated polysiloxanes, and more preferably from the group of carboxyl-C₁-C₂₀-alkyl-terminated poly(dimethylsiloxanes) or the carboxylic acid- and/or anhydride-functional polysiloxanes are anhydride-functional polysiloxanes selected from the group of succinic anhydride alkyl-terminated polysiloxanes, preferably from the group of succinic anhydride C₁-C₂₀-alkyl-terminated polysiloxanes, and more preferably from the group of succinic anhydride C₁-C₂₀-alkyl-terminated poly(dimethylsiloxanes).

### DEFINITIONS

For the present invention the following terms have the following meanings:
A "polycarbonate" in the meaning of the present invention is a thermoplastic polymer with the general formula -[R-O-C(O)-O]ₙ-, wherein R is an organic moiety which is derived from a monomer, preferably a diol, which is used to prepare the polymer and n indicates the number of repeating units in the polymer.
A "calcium carbonate-containing material" in the meaning of the present invention is a material which comprises at least 50 wt.% of calcium carbonate, based on the total weight of the calcium carbonate-containing material.
A "aliphatic-substituted succinic anhydride" is a succinic anhydride, of which one or more hydrogen atoms is/are substituted with one or more aliphatic groups. "Aliphatic groups" are acyclic or cyclic, saturated or unsaturated hydrocarbon compounds, excluding aromatic hydrocarbon compounds.
A "carboxylic acid-functional polysiloxane" is a polysiloxane which bears at least one carboxylic acid functional group or a salt thereof.
An "anhydride-functional polysiloxane" is a polysiloxane which bears at least one organic acid anhydride functional group, which is optionally cyclic.

Where the present description and claims define subject-matter "comprising" certain features, this is to interpreted as meaning the it includes those features, but that it does not exclude other non-specified features. For the purposes of the present invention, the term "essentially consisting of and "consisting of" are considered to be specific embodiments of the term "comprising of". If hereinafter a subject-matter is defined to comprise at least a certain number of features, this is also to be understood to disclose a subject-matter, which optionally (essentially) consists only of these features.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated. Terms like "obtainable" or "obtained" are used interchangeably. This e.g. means that, unless the context clearly dictates otherwise, the term "obtained" does not mean to indicate that, an embodiment must be obtained by the sequence of steps following the term "obtained" even though such a limited understanding is always included by the terms "obtained" as a preferred embodiment.

### DETAILED DESCRIPTION

### The polycarbonate composition according to the invention

In one aspect, the present invention provides a polycarbonate composition comprising
a) a polycarbonate resin,
b) a surface-treated calcium carbonate-containing material, wherein the surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof,
c) optionally titanium dioxide,
d) optionally one or more additives.

In the following, further embodiments and preferred embodiments of the polycarbonate composition according to the invention as well as its components are described in more detail.

### The polycarbonate resin

The polycarbonate composition according to the present invention comprises a polycarbonate resin as a component a).

It is one requirement of the present invention that the polycarbonate composition requires at least one polycarbonate resin. The polycarbonate composition may comprise more than one (e.g. two to five) polycarbonate resin. For example, the polycarbonate composition according to the invention may comprise two or three different polycarbonate resins.

The polycarbonate resin may be any polycarbonate resin which is suitable for use together with the surface-treated calcium carbonate-containing material as defined herein.

According to one embodiment, the polycarbonate resin comprises a repeating unit which is derived from a monomer selected from the group of bisphenols. Bisphenols are a group of chemical compounds comprising two hydroxyphenyl functional groups. Compounds which fall under the group of Bisphenols and which are useful for preparing polycarbonate are well known to the person of skill in the art.

According to one preferred embodiment, the polycarbonate resin comprises a repeating unit which is derived from optionally substituted bisphenol A. Bisphenol A is a synonym for 2,2-bis(4-hydroxyphenyl)propane.

According to one embodiment, the polycarbonate resin is a poly(bisphenol A carbonate), wherein the bisphenol A-derived repeating unit is optionally substituted. According to one preferred embodiment, the polycarbonate resin is poly(bisphenol A carbonate).

The polycarbonate resin may be defined by its melt flow rate determined according to ISO 1133 (300 °C/1.2 kg). According to one embodiment, the polycarbonate resin has a melt flow rate according to ISO 1133 (300 °C/1.2 kg) in the range of 1.0 to 50 g/10 min, preferably in the range of 5.0 to 40 g/10 min, and more preferably in the range of 10 to 30 g/10 min (e.g. 15 to 25 g/10 min or 17 to 22 g/10 min).

According to one embodiment, the polycarbonate resin is a poly(bisphenol A carbonate), wherein the bisphenol A-derived repeating unit is optionally substituted, and wherein the polycarbonate resin has a melt flow rate according to ISO 1133 (300 °C/1.2 kg) in the range of 1.0 to 50 g/10 min, preferably in the range of 5.0 to 40 g/10 min, and more preferably in the range of 10 to 30 g/10 min (e.g. 15 to 25 g/10 min or 17 to 22 g/10 min).

According to one preferred embodiment, the polycarbonate resin is a poly(bisphenol A carbonate), wherein the polycarbonate resin has a melt flow rate according to ISO 1133 (300 °C/1.2 kg) in the range of 1.0 to 50 g/10 min, preferably in the range of 5.0 to 40 g/10 min, and more preferably in the range of 10 to 30 g/10 min (e.g. 15 to 25 g/10 min or 17 to 22 g/10 min).

### The surface-treated calcium carbonate-containing material

The polycarbonate composition according to the invention comprises a surface-treated calcium carbonate-containing material as a component b).

The surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof.

In the following, the calcium carbonate-containing material which is used as a starting material to prepare the surface-treated calcium carbonate-containing material is further defined.

The calcium carbonate-containing material may be a natural ground calcium carbonate, a precipitated calcium carbonate, or a mixture thereof.

According to one preferred embodiment, the calcium carbonate-containing material is selected from the group consisting of marble, chalk, limestone, precipitated calcium carbonate, and mixtures thereof.

In one embodiment, the calcium carbonate-containing material is a precipitated calcium carbonate. "Precipitated calcium carbonate" (PCC) in the meaning of the present invention is a synthesized material, generally obtained by precipitation following reaction of carbon dioxide and calcium hydroxide in an aqueous environment or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment, the precipitated calcium carbonate is precipitated calcium carbonate, preferably comprising aragonitic, vateritic or calcitic mineralogical crystal forms or mixtures thereof.

In a preferred embodiment, the calcium carbonate-containing material is a natural ground calcium carbonate. The natural ground calcium carbonate may be selected from calcium carbonate containing minerals selected from the group consisting of dolomite, marble, chalk, limestone and mixtures thereof. It is preferred that the natural ground calcium carbonate is selected from marble, limestone or a mixture thereof, and most preferably the natural ground calcium carbonate is marble.

Thus, according to one preferred embodiment, the calcium carbonate-containing material is a natural ground calcium carbonate selected from dolomite, marble, chalk, limestone and mixtures thereof, more preferably from marble, limestone and mixtures thereof, and most preferably the natural ground calcium carbonate is marble.

A natural ground calcium carbonate may be obtained, for example, in a wet and/or dry comminution step, such as crushing and/or grinding, from natural calcium carbonate-containing minerals (e.g. chalk, limestone, marble or dolomite). Natural calcium carbonate may comprise further naturally occurring components such as alumino silicate etc. According to one embodiment, the natural ground calcium carbonate is a wet-natural ground calcium carbonate. In another embodiment, the natural ground calcium carbonate is a dry-natural ground calcium carbonate.

The grinding step can be carried out with any conventional grinding device, for example, under conditions such that refinement predominantly results from impacts with a secondary body, i.e. in one or more of a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. The grinding step may also be performed under conditions such that autogenous grinding takes place and/or by horizontal ball milling, and/or other such processes known to the skilled man. In one embodiment, grinding is carried out in a vertical or horizontal ball mill, preferably in a vertical ball mill. Such vertical and horizontal ball mills usually consist of a vertically or horizontally arranged, cylindrical grinding chamber comprising an axially fast rotating agitator shaft being equipped with a plurality of paddles and/or stirring discs, such as described for example in EP 0 607 840 A1. It is to be noted that grinding of the calcium carbonate mineral may be carried out by using at least one of the aforementioned grinding methods or devices. However, it is also possible to use a combination of any of the foregoing methods or a series of any of the aforementioned grinding devices. Subsequent to the grinding step, the ground calcium carbonate mineral may, optionally, be divided into two or more fractions, each having different particle distributions, by use of a classifying step. A classifying step in general serves to divide a feed fraction having a certain particle size distribution into a coarse fraction, which may be subjected to another grinding cycle, and a fine fraction, which may be used as the final product. For this purpose, screening devices as well as gravity-based devices, such as centrifuges or cyclones (e.g. hydrocyclones) and any combination of the aforementioned devices may be used.

In one preferred embodiment, the natural ground calcium carbonate is selected from the group consisting of chalk, limestone or marble. More preferably, the natural ground calcium carbonate is limestone or marble, and most preferably is marble.

According to one embodiment of the invention, the calcium carbonate-containing material has a calcium carbonate content of at least 75.0 wt.% (e.g. 75.0 to 99.9 wt.%), more preferably at least 90.0 wt.% (e.g. 90.0 to 99.9 wt.%), and most preferably at least 95 wt.-% (e.g. 95.0 to 99.9 wt.%), based on the total weight of the calcium carbonate-containing material. According to one preferred embodiment, the calcium carbonate-containing material is a natural ground calcium carbonate (e.g. obtained from limestone or marble) having a calcium carbonate content of at least 75.0 wt.%, preferably at least 90.0 wt.%, and most preferably at least 95.0 wt.% (e.g. 95.0 to 99.9 wt.%), based on the total weight of the calcium carbonate-containing material.

The calcium carbonate-containing material may be further characterized by its physical properties such as particle size or surface area.

The particle size of particulate materials is defined herein by its distribution of particle sizes *dₓ*. Therein, the value *dₓ* represents the diameter relative to which x % by weight of the particles have diameters less than *dₓ*. This means that, for example, the *d*₂₀ value is the particle size at which 20 wt.-% of all particles are smaller than that particle size. The *d*₅₀ value is thus the weight median particle size, i.e. 50 wt.-% of all particles are smaller than this particle size. For the purpose of the present invention, the particle size is specified as weight median particle size *d*₅₀(wt.) unless indicated otherwise. Weight-based particle sizes can be determined by sedimentation analysis, e.g. as described in the examples section herein below.

The particle size of the calcium carbonate-containing material is not particularly limited as long as the material is suitable for being surface-treated with the at least one hydrophobizing agent as defined herein.

According to one embodiment of the invention, the calcium carbonate-containing material has a weight-median particle size dso in the range of 0.1 to 15 micrometers, preferably 0.3 to 5.0 micrometers, and more preferably 0.5 to 3.0 micrometers (e.g. 0.5 to 2.0 micrometers, 1.5 to 2.0 micrometers, or 0.5 to 1.0 micrometers).

According to one embodiment of the invention, the calcium carbonate-containing material has a weight-based top cut particle size d₉₈ in the range of 0.5 to 40 micrometers, preferably 1.0 to 20 micrometers, and more preferably 1.0 to 10 micrometers (e.g. 2.5 to 9.0 micrometers, 2.5 to 3.5 micrometers, or 7.0 to 9.0 micrometers).

According to one preferred embodiment, the calcium carbonate-containing material has a weight-median particle size dso in the range of 0.1 to 15 micrometers, preferably 0.3 to 5.0 micrometers, and more preferably 0.5 to 3.0 micrometers (e.g. 0.5 to 2.0 micrometers, 1.5 to 2.0 micrometers, or 0.5 to 1.0 micrometers) and a weight-based top cut particle size d₉₈ in the range of 0.5 to 40 micrometers, preferably 1.0 to 20 micrometers, and more preferably 1.0 to 10 micrometers (e.g. 2.5 to 9.0 micrometers, 2.5 to 3.5 micrometers, or 7.0 to 9.0 micrometers).

The surface area of the calcium carbonate-containing material is also not particularly limited as long as the material is suitable for being surface-treated with at least one hydrophobizing agent as defined herein. For the present invention, the "specific surface area" is the specific surface area (in m²/g) as determined using the BET method (using nitrogen as adsorbing gas) according to ISO 9277:2010.

According to one embodiment, the calcium carbonate-containing material has a specific surface area of from 0.5 m²/g to 40 m²/g, preferably from 1.0 m²/g to 35 m²/g, and more preferably from 2 m²/g to 20 m²/g (e.g. 2 m²/g to 10 m²/g, 2 m²/g to 5 m²/g, or 5 m²/g to 10 m²/g) as measured using nitrogen and the BET method. Most preferably, the calcium carbonate-containing material has a specific surface area of from 2.4 to 15 m²/g.

The calcium carbonate-containing material may be characterized by its optical properties.

According to one embodiment, the calcium carbonate-containing material has one or more of the following optical properties:
(i) L* according to DIN 6174 of above 92, and preferably of above 95,
(ii) b* according to DIN 6174 of below 3.0, and
(iii) a Tappi brightness R457 according to ISO 2469 of above 88%, and preferably of above 90%.

According to one preferred embodiment, the calcium carbonate-containing material has the following optical properties:
(i) L* according to DIN 6174 of above 92, and preferably of above 95,
(ii) b* according to DIN 6174 of below 3.0, and
(iii) a Tappi brightness R457 according to ISO 2469 of above 88%, and preferably of above 90%.

In one preferred embodiment, the calcium carbonate-containing material to be surface-treated is a calcium carbonate-containing material (e.g. a natural ground calcium carbonate as described herein above) having a calcium carbonate content of at least 75.0 wt.-% (e.g. 75.0 to 99.9 wt.%), more preferably at least 90.0 wt.-% (e.g. 90.0 to 99.9 wt.%), and most preferably at least 95 wt.-% (e.g. 95.0 to 99.9 wt.%), based on the total weight of the calcium carbonate-containing material, wherein the calcium carbonate-containing material has a weight-median particle size d₅₀ in the range of 0.1 to 15 micrometers, preferably 0.3 to 5.0 micrometers, and more preferably 0.5 to 3.0 micrometers (e.g. 0.5 to 2.0 micrometers, 1.5 to 2.0 micrometers, or 0.5 to 1.0 micrometers), and a weight-based top cut particle size d₉₈ in the range of 0.5 to 40 micrometers, preferably 1.0 to 20 micrometers, and more preferably 1.0 to 10 micrometers (e.g. 2.5 to 9.0 micrometers, 2.5 to 3.5 micrometers, or 7.0 to 9.0 micrometers), wherein the calcium carbonate-containing material has a specific surface area of from 0.5 m²/g to 40 m²/g, preferably from 1.0 m²/g to 35 m²/g, and more preferably from 2 m²/g to 20 m²/g (e.g. 2 m²/g to 10 m²/g, 2 m²/g to 5 m²/g, or 5 m²/g to 10 m²/g), and most preferably from 2.4 m²/g to 15 m²/g, as measured using nitrogen and the BET method, and wherein the calcium carbonate-containing material has the following optical properties:
(i) L* according to DIN 6174 of above 92, and preferably of above 95,
(ii) b* according to DIN 6174 of below 3, and
(iii) a Tappi brightness R457 according to ISO 2469 of above 88%, and preferably of above 90%.

In one preferred embodiment, the calcium carbonate-containing material to be surface-treated is a natural ground calcium carbonate obtained from marble, wherein the calcium carbonate-containing material has a weight-median particle size dso in the range of 0.1 to 15 micrometers, preferably 0.3 to 5.0 micrometers, and more preferably 0.5 to 3.0 micrometers (e.g. 0.5 to 2.0 micrometers, 1.5 to 2.0 micrometers, or 0.5 to 1.0 micrometers), and a weight-based top cut particle size d₉₈ in the range of 0.5 to 40 micrometers, preferably 1.0 to 20 micrometers, and more preferably 1.0 to 10 micrometers (e.g. 2.5 to 9.0 micrometers, 2.5 to 3.5 micrometers, or 7.0 to 9.0 micrometers), wherein the calcium carbonate-containing material has a specific surface area of from 0.5 m²/g to 40 m²/g, preferably from 1.0 m²/g to 35 m²/g, and more preferably from 2 m²/g to 20 m²/g (e.g. 2 m²/g to 10 m²/g, 2 m²/g to 5 m²/g, or 5 m²/g to 10 m²/g), and most preferably from 2.4 m²/g to 15 m²/g, as measured using nitrogen and the BET method

In the following, the one or more hydrophobizing agent which is used for surface-treating the calcium carbonate-containing material is further defined.

It is possible to use one hydrophobizing agent selected from the group as defined herein for surface-treating the calcium carbonate-containing material. It is however also possible to use more than one hydrophobizing agents selected from the group as defined herein such as two, three, four, five, six, or more hydrophobizing agents selected from the group as defined herein.

The aliphatic-substituted succinic anhydrides are not particularly limited as long as they are suitable for hydrophobizing the surface of the calcium carbonate-containing material. The aliphatic-substituted succinic anhydrides are preferably aliphatic mono-substituted succinic anhydrides, i.e. succinic anhydride, of which one hydrogen is substituted with one aliphatic group.

The aliphatic group may be a cyclic or non-cyclic aliphatic group. Further, the aliphatic substituent may be linear or branched. The aliphatic-substituted succinic anhydrides may be alkylsubstituted succinic anhydrides and/or alkenyl-substituted succinic anhydrides.

According to one embodiment, the aliphatic-substituted succinic anhydrides are C₂-C₃₀- aliphatic-substituted succinic anhydrides, and preferably C₂-C₃₀-aliphatic mono-substituted succinic anhydrides (e.g. C₁₀-C₃₀-aliphatic mono-substituted succinic anhydrides).

According to one preferred embodiment, the aliphatic-substituted succinic anhydrides are alkenyl-substituted succinic anhydrides, preferably alkenyl mono-substituted succinic anhydrides. According to one preferred embodiment, the aliphatic-substituted succinic anhydrides are C₂-C₃₀- alkenyl, preferably C₁₀-C₂₅-alkenyl (e.g. C₁₅-C₂₀-alkenyl) mono-substituted succinic anhydrides.

According to one embodiment, the aliphatic-substituted succinic anhydrides are selected from the group consisting of vinylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

For example, the one or more hydrophobizing agent may be a blend comprising C₁₅-C₂₀- alkenyl mono-substituted succinic anhydrides (e.g. a blend of hexadecenyl succinic anhydride and octadecenyl succinic anhydride). The C₁₅-C₂₀-alkenyl mono-substituted succinic anhydrides may be present in an amount of at least 90 wt.% (e.g. at least 95 wt.% or 95 to 99.9 wt.%), based on the total weight of the blend. Further, the C₁₅-C₂₀-alkenyl mono-substituted succinic anhydrides may be mainly branched C₁₅-C₂₀-alkenyl mono-substituted succinic anhydrides.

The group of the at least one hydrophobizing agent further contains carboxylic acid- and/or anhydride-functional polysiloxanes, i.e. carboxylic acid-functional polysiloxanes, anhydride-functional polysiloxane, and a carboxylic acid- and anhydride-functional polysiloxane.

According to one embodiment, the carboxylic acid- and/or anhydride-functional polysiloxanes are carboxylic acid-functional polysiloxanes selected from the group of carboxylalkyl-terminated polysiloxanes, preferably from the group of carboxyl-C₁-C₂₀-alkyl-terminated polysiloxanes, and more preferably from the group of carboxyl-C₁-C₂₀-alkyl-terminated poly(dimethylsiloxanes) (e.g. carboxyl decyl-terminated poly(dimethylsiloxane)).

According to another embodiment, the carboxylic acid- and/or anhydride-functional polysiloxanes are anhydride-functional polysiloxanes selected from the group of succinic anhydride alkyl-terminated polysiloxanes, preferably from the group of succinic anhydride C₁-C₂₀-alkyl-terminated polysiloxanes, and more preferably from the group of succinic anhydride C₁-C₂₀-alkyl-terminated poly(dimethylsiloxanes).

The carboxylic acid- and/or anhydride-functional polysiloxanes can have a viscosity from 10 to 1200 cSt, and preferably from 10 to 200 cSt. The viscosity can be measured at 25°C according to the skilled persons knowledge. Furthermore, the carboxylic acid- and/or anhydride-functional polysiloxanes can have a molecular weight in the range of 400 to 50 000 g/mol, and preferably in the range of 500 to 15 000 g/mol. In one embodiment, the carboxylic acid- and/or anhydride-functional polysiloxanes can have a viscosity from 10 to 1200 cSt, preferably from 10 to 200 cSt, and a molecular weight in the range of 400 to 50 000 g/mol, and preferably in the range of 500 to 15 000 g/mol.

According to one embodiment, the carboxylic acid- and/or anhydride-functional polysiloxanes have a structure according to Formula (I): 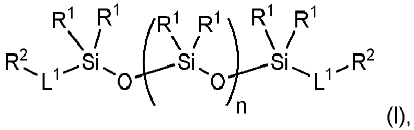 wherein
R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
R² is each independently selected from a carboxyl group and anhydride groups, preferably from a carboxyl group and cyclic anhydride groups (e.g. succinic anhydride, phthalic anhydride, a maleic anhydride, malonic anhydride, etc.), and more preferably from a carboxyl group and succinic anhydride,
L¹ is a linking moiety, and preferably is an optionally substituted aliphatic chain, and
n is an integer from 1 to 1000 (e.g. from 1 to 500 or from 10 to 100).

According to one preferred embodiment, the carboxylic acid- and/or anhydride-functional polysiloxanes have a structure according to Formula (II): 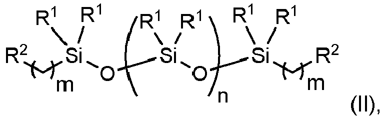 wherein
R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
R² is each independently selected from a carboxyl group and anhydride groups, preferably from a carboxyl group and cyclic anhydride groups (e.g. succinic anhydride, phthalic anhydride, a maleic anhydride, malonic anhydride, etc.), and more preferably from a carboxyl group and succinic anhydride,
m is an integer from 1 to 25 (e.g. 1 to 15), and
n is an integer from 1 to 1000 (e.g. from 1 to 500 or from 10 to 100).

According to one preferred embodiment, the carboxylic acid- and/or anhydride-functional polysiloxanes are anhydride-functional polysiloxanes having a structure according to Formula (III): 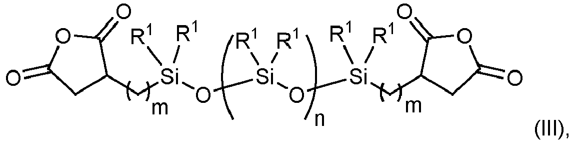 wherein
R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
m is an integer from 1 to 25 (e.g. 1 to 15), and
n is an integer from 1 to 1000 (e.g. from 1 to 500 or from 10 to 100).

According to one preferred embodiment, the carboxylic acid- and/or anhydride-functional polysiloxanes are anhydride-functional poly(dimethylsiloxanes) having a structure according to Formula (III): 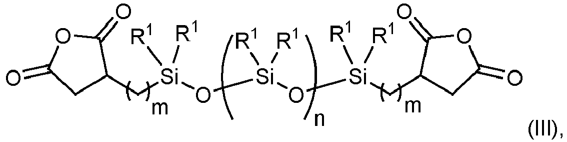 wherein
R¹ is methyl,
m is an integer from 1 to 25 (e.g. 1 to 15), and
n is an integer from 1 to 1000 (e.g. from 1 to 500 or from 10 to 100).

The anhydride-functional polysiloxanes having a structure according to Formula (III), preferably the poly(dimethyl)siloxanes, can have a viscosity from 10 to 500 cSt, and preferably from 50 to 200 cSt. The viscosity can be measured at 25°C according to the skilled persons knowledge. Furthermore, the anhydride-functional polysiloxanes having a structure according to Formula (III), preferably the poly(dimethyl)siloxanes, can have a molecular weight in the range of 400 to 10 000 g/mol, and preferably in the range of 500 to 1 000 g/mol. In one preferred embodiment, the anhydride-functional polysiloxanes having a structure according to Formula (III), preferably the poly(dimethyl)siloxanes, have a viscosity from 10 to 500 cSt, preferably from 50 to 200 cSt, and a molecular weight in the range of 400 to 10 000 g/mol, and preferably in the range of 500 to 1 000 g/mol.

According to another preferred embodiment, the carboxylic acid- and/or anhydride-functional polysiloxanes are carboxylic acid-functional polysiloxanes having a structure according to Formula (IV): 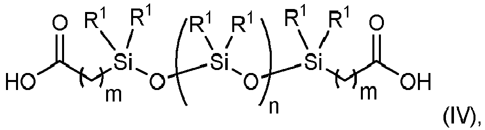 wherein
R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
m is an integer from 1 to 25 (e.g. 1 to 15), and
n is an integer from 1 to 1000 (e.g. from 1 to 500 or from 10 to 100).

According to another preferred embodiment, the carboxylic acid- and/or anhydride-functional polysiloxanes are carboxylic acid-functional poly(dimethyl)siloxanes having a structure according to Formula (IV): 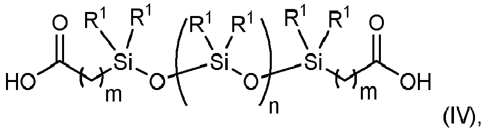 wherein
R¹ is methyl,
m is an integer from 1 to 25 (e.g. 1 to 15), and
n is an integer from 1 to 1000 (e.g. from 1 to 500 or from 10 to 100).

The carboxylic acid-functional polysiloxanes having a structure according to Formula (IV), preferably the poly(dimethyl)siloxanes, can have a viscosity from 10 to 1200 cSt, preferably from 10 to 100 cSt. The viscosity can be measured at 25°C according to the skilled persons knowledge. Furthermore, the carboxylic acid-functional polysiloxanes having a structure according to Formula (IV), preferably the poly(dimethyl)siloxanes, can have a molecular weight in the range of 500 to 50 000 g/mol, and preferably in the range of 500 to 15 000 g/mol. In one preferred embodiment, the carboxylic acid-functional polysiloxanes having a structure according to Formula (IV), preferably the poly(dimethyl)siloxanes, have a viscosity from 10 to 1200 cSt, preferably from 10 to 100 cSt, and a molecular weight in the range of 500 to 50 000 g/mol, and preferably in the range of 500 to 15 000 g/mol.

According to one embodiment of the invention, the at least one hydrophobizing agent is selected from the group of aliphatic-substituted succinic anhydrides as defined herein.

According to another embodiment of the invention, the at least one hydrophobizing agent is selected from the group consisting of carboxylic acid- and/or anhydride-functional polysiloxanes as defined herein.

According to yet another embodiment, the at least one hydrophobizing agent is a mixture of at least one aliphatic-substituted succinic anhydride as defined herein and at least one carboxylic acid- and/or anhydride-functional polysiloxane as defined herein.

It is preferred that the at least one hydrophobizing agent is selected from the group of aliphatic-substituted succinic anhydrides as defined herein, and preferably from alkenyl mono-substituted succinic anhydrides as defined herein.

The at least one hydrophobizing agent may principally be used in any amount which is suitable for hydrophobizing the surface of the calcium carbonate-containing material. The amount of the at least one hydrophobizing agent used for surface-treating the calcium carbonate-containing material may be in the range of 0.01 to 10.0 wt.%, based on the weight of the calcium carbonate-containing material. According to one preferred embodiment of the present invention, the amount of the at least one hydrophobizing agent used for surface-treating the calcium carbonate-containing material is in the range of 0.1 to 6.0 wt.%, more preferably 0.3 to 5.0 wt.% (e.g. 0.3 to 2.5 wt.%), even more preferably 0.4 to 4.0 wt.%, and most preferably 0.5 to 3.0 wt.% (e.g. 0.5 to 2.5 wt.%), based on the weight of the calcium carbonate-containing material.

Additionally or alternatively, the amount of the at least one hydrophobizing agent used for surface-treating the calcium carbonate-containing material maybe in the range of 0.01 to 1.0 wt.% / m² (BET specific surface area of calcium carbonate-containing material), based on the weight and the BET specific surface area of the calcium carbonate-containing material.

According to one embodiment of the present invention, the amount of the at least one hydrophobizing agent used for surface-treating the calcium carbonate-containing material is in the range of 0.1 to 0.4 wt.% / m² (BET specific surface area of calcium carbonate-containing material), based on the weight and the BET specific surface area of the calcium carbonate-containing material.

In addition to the use of the at least one hydrophobizing agent as defined herein, the calcium carbonate-containing material may further be surface-treated with at least one co-hydrophobizing agent or another surface-treating agent. The calcium carbonate-containing material may be surface-treated with the additional agent before, during and/or after the surface-treatment with the at least one hydrophobizing agent as described herein.

The at least one co-hydrophobizing agent may be any suitable surface-treating agent excluding the group of surface-treated agent defined herein as the at least one hydrophobizing agent.

According to one embodiment, the calcium carbonate-containing material is surface-treated with at least one co-hydrophobizing agent before, during and/or after the surface-treatment with the at least one hydrophobizing agent. The at least one co-hydrophobizing agent may be selected from fatty acids such as, but not limited to, stearic acid, palmitic acid, and mixtures thereof.

The process step of surface-treating the calcium carbonate-containing material with the at least one hydrophobizing agent as defined herein can be carried out by any process known in the art for surface-treating a calcium carbonate-containing material with a surface-treatment agent. For example, the surface-treating step may be carried out in a wet surface-treating step or in a dry surface-treating step as known in the art. In a wet surface-treating step, the at least one hydrophobizing agent may be mixed with a slurry of the calcium carbonate-containing material and water followed by dehydrating and/or drying the mixture. In a dry surface-treating step, the at least one hydrophobizing agent may be mixed with a dry calcium carbonate-containing material. In such case, the at least one hydrophobizing agent may be added in form of a solution or suspension together with a solvent (e.g. water) or in pure form. If the at least one hydrophobizing agent is added in pure form, the temperature during the surface-treating step may be equal or higher than the melting point of the at least one hydrophobizing agent.

According to one embodiment, the surface-treated calcium carbonate-containing material is obtained by surface-treating the calcium carbonate-containing material with the at least one hydrophobizing agent in a dry treating step, and optionally wherein the at least one hydrophobizing agent is added in form of a solution or suspension together with a solvent (e.g. water) or in pure form, and optionally, when the at least one hydrophobizing agent is added in pure form, the temperature during the surface-treating step may be equal or higher than the melting point of the at least one hydrophobizing agent.

According to one embodiment, the surface-treated calcium carbonate-containing material is obtained by surface-treating the calcium carbonate-containing material with the at least one hydrophobizing agent as defined herein below for step i) of the process according to the invention. Therefore, the embodiments described for step i) of the process according to the invention, can also be understood as embodiments for the product (i.e. the surface-treated calcium carbonate-containing material) obtained by such process step.

A skilled person knows and/or can determine the specific structural and/or chemical features of a surface-treated calcium carbonate-containing material which is obtained as defined herein.

The surface-treated calcium carbonate-containing material may comprise the at least one hydrophobizing agent and/or reaction products thereof (e.g. salts thereof and/or ring opened products thereof). Reaction products of the at least one hydrophobizing agent may be salts of the at least one hydrophobizing agent or ring opened products of the at least one hydrophobizing agent. Salts of the at least one hydrophobizing agent may be carboxylic acid salts (e.g. calcium carboxylates) of the at least one hydrophobizing agent. Ring opened products of the at least one hydrophobizing agent may be products which are derived by ring opening reactions (e.g. hydrolysis) of one or more (succinic) anhydride groups of the at least one hydrophobizing agent, such as aliphatic-substituted succinic acids and/or aliphatic-substituted succinates (e.g. aliphatic-substituted Ca²⁺ succinates) or dicarboxyl alkyl-terminated polysiloxanes and/or dicarboxylate alkyl-terminated polysiloxanes.

The surface-treated calcium carbonate-containing material may comprise a surface treatment layer comprising the at least one hydrophobizing agent and/or reaction products thereof. The surface-treated calcium carbonate-containing material may (essentially) consists of the calcium carbonate-containing material as defined herein and a surface treatment layer comprising the at least one hydrophobizing agent as defined herein and/or reaction products thereof.

Surface-treated calcium carbonate-containing material may be characterized by its moisture pick-up susceptibility.

The "moisture pick up susceptibility" of a material refers to the amount of moisture absorbed on the surface of said material within a certain time upon exposure to a defined humid atmosphere and is expressed in mg/g. The moisture pick up susceptibility can be determined in mg moisture/g after exposure to an atmosphere of 10 and 85% relative humidity, respectively, for each 2.5 h at a temperature of +23°C (± 2°C). For this purpose, the sample is first kept at an atmosphere of 10% relative humidity for 2.5 h, then the atmosphere is changed to 85% relative humidity at which the sample is kept for another 2.5 hours. The weight increase between 10 and 85% relative humidity is then used to calculate the moisture pick-up in mg moisture/g of sample. The moisture pick-up susceptibility can be measured, for example, by using a GraviTest 6300 device from Gintronic.

The surface-treated calcium carbonate-containing material may have a moisture pick-up susceptibility of below 3.0 mg (H₂O) / g (material) (e.g. 0.01 to 3.0 mg/g).

According to one embodiment of the present invention, the surface-treated calcium carbonate-containing material has a moisture pick-up susceptibility of below 2.0 mg (H₂O) / g (material) (e.g. 0.01 to 2.0 mg/g), preferably below 1.2 mg (H₂O) / g (material) (e.g. 0.01 to 1.2 mg/g), and more preferably below 1.0 mg (H₂O) / g (material) (e.g. 0.01 to 1.0 mg/g).

Surface-treated calcium carbonate-containing material may be characterized by its residual moisture content. The "residual moisture content" of a material refers to the percentage of moisture (i.e. water) which may be desorbed from a sample upon heating. The residual moisture content can be determined by Coulometric Karl Fischer method or by thermogravimetric (TGA) analysis. Both methods are well-known to the person of skill in the art.

For example, the residual total moisture content can be determined according to the Coulometric Karl Fischer measurement method, wherein the filler material is heated to 220°C, and the water content released as vapor and isolated using a stream of nitrogen gas (at 80 ml/min) is determined in a Coulometric 35 Karl Fischer unit (e.g. Mettler-Toledo coulometric KF Titrator C30, combined with Mettler-Toledo oven DO 0337).

TGA analysis can be carried out at e.g. 105°C until the sample has reached a constant weight.

The surface-treated calcium carbonate-containing material may have a residual moisture content of at most 0.5 wt.% (e.g. 0.001 to 0.5 wt.%), preferably of at most 0.4 wt.-% (e.g. from 0.002 wt.-% to 0.4 wt.-%), most preferably of at most 0.3 wt.-%, (e.g. from 0.0025 wt.-% to 0.3 wt.-%), based on the total weight of the surface-treated calcium carbonate-containing material.

According to one embodiment of the present invention, the surface-treated calcium carbonate-containing material has a residual moisture content of below 0.3 wt.% (e.g. 0.001 to 0.3 wt.%), as determined by TGA analysis.

The surface-treated calcium carbonate-containing material may have a specific surface area (BET) which is reduced, e.g. not more than 25%, compared to the specific surface area (BET) of the calcium carbonate-containing material before surface-treatment. According to one embodiment, the surface-treated calcium carbonate-containing material has a specific surface area in the range from 0.3 m²/g to 35 m²/g, preferably from 0.8 m²/g to 30 m²/g, and more preferably from 1.5 m²/g to 18 m²/g (e.g. 1.8 m²/g to 9.9 m²/g, 1.8 m²/g to 4.9 m²/g, or 4.8 m²/g to 9.9 m²/g) as measured using nitrogen and the BET method.

According to one embodiment, the surface-treated calcium carbonate-containing material has a weight-median particle size dso in the range of 0.1 to 15 micrometers, preferably 0.3 to 5.0 micrometers, and more preferably 0.5 to 3.0 micrometers (e.g. 0.5 to 2.0 micrometers, 1.5 to 2.0 micrometers, or 0.5 to 1.0 micrometers) and a weight-based top cut particle size d₉₈ in the range of 0.5 to 40 micrometers, preferably 1.0 to 20 micrometers, and more preferably 1.0 to 10 micrometers (e.g. 2.5 to 9.0 micrometers, 2.5 to 3.5 micrometers, or 7.0 to 9.0 micrometers).

### The optional titanium dioxide

The polycarbonate composition according to the invention optionally comprises titanium dioxide as a component c).

In one preferred embodiment of the invention, the polycarbonate composition comprises titanium dioxide as a component c). In one embodiment, the polycarbonate composition does not contain titanium dioxide.

The inventors have surprisingly found that using a surface-treated calcium carbonate-containing material as defined herein for a polycarbonate composition comprising titanium dioxide as a white pigment can improve the mechanical properties of the composition, or an article prepared from the composition, without negatively influencing the optical properties, and specifically the whiteness, of the composition or article. It has further been found that a surface-treated calcium carbonate-containing material as defined herein can be used for at least partially substituting a titanium dioxide in a polycarbonate composition for use in so-called white applications. This is particularly advantageous, since the surface-treated calcium carbonate-containing material as defined herein is usually much easier and much cheaper to prepare as titanium dioxide materials for a comparable purpose.

The titanium dioxide may be any titanium dioxide which is suitable for use in polycarbonate compositions, preferably as a pigment, and optionally a white pigment. Such titanium dioxides are well-known to the skilled person.

Titanium dioxide may be a rutile-type titanium dioxide or an anatase-type titanium dioxide, and optionally is a rutile-type titanium dioxide. A rutile-type titanium dioxide may be produced by the sulfate process or the chloride process. Both processes are well known in the art. According to one embodiment, the titanium dioxide is a rutile-type titanium dioxide, which is produced by the chloride process.

Furthermore, the titanium dioxide may be surface-treated. Suitable surface-treating compounds include, but are not limited to aluminum compounds and/or polysiloxanes.

The titanium dioxide may be a titanium dioxide having a titanium dioxide content according to DIN EN ISO 591 of equal or above 90%, and optionally of equal or above 95%.

The titanium dioxide may have a standard classification according to DIN EN ISO 591-1 of R1 or R2, and optionally of R2.

Titanium dioxide may have an oil absorption according to DIN EN ISO 787-5 of above 12 g/100 g of pigment, and optionally in the range of 12 g/100 g of pigment to 16 g/100 g of pigment (e.g. 13.0 to 15.0g/100 g).

According to one embodiment, the titanium dioxide is a rutile-type titanium dioxide which is optionally obtained by the chloride process, which is surface treated with aluminum compounds and/or polysiloxanes, and which has a titanium dioxide content according to DIN EN ISO 591 of equal or above 95% (e.g. equal or above 96%).

### The optional one or more additives

The polycarbonate composition according to the invention optionally comprises one or more additives (e.g. 1 to 20 or 1 to 10) as a component d). It is usually preferred that the polycarbonate composition according to the invention comprises at least one additive.

For the present invention, it is to be understood that the surface-treated calcium carbonate-containing material as defined herein and the optional titanium dioxide as defined herein are not considered to be additives of component d).

The one or more additives may be selected by the skilled person according to its needs.

According to one embodiment, the one or more additives are selected from the group consisting of fillers, UV absorbers, light stabilizers, processing stabilizers, antioxidants, heat stabilizers, nucleating agents, metal deactivators, impact modifiers, plasticizers, lubricants, rheology modifiers, processing aids, pigments, dyes, optical brighteners, antimicrobials, antistatic agents, slip agents, anti-block agents, coupling agents, dispersants, compatibilizers, oxygen scavengers, acid scavengers, markers, antifogging agents, surface modifiers, flame retardants, blowing agents, smoke suppressors, and mixtures of the foregoing additives. The fillers are preferably selected from the group consisting of talc, mica, silica, kaolin, bentonite and mixtures thereof.

### The polycarbonate composition

The polycarbonate composition according to the invention may be further defined by its combination of components and their specific weight amounts as well as by its physical properties.

According to one embodiment, the polycarbonate composition comprises the polycarbonate resin in an amount of at least 50 wt.% (e.g. 50 to 99.5 wt.%), preferably at least 75 wt.%, and more preferably at least 85 wt.% (e.g. 85 to 99.5 wt.%), based on the total weight of the polycarbonate composition. In one embodiment, the polycarbonate composition comprises the polycarbonate resin in an amount of from 88 to 98 wt.%, based on the total weight of the polycarbonate composition.

In addition to the at least one polycarbonate resin, the polycarbonate composition may also comprise one or more additional polymeric resins. Thus, the polycarbonate composition according to the invention is not limited to a composition, which contains a polycarbonate as the only polymeric resin. The polycarbonate resin may be used in the polycarbonate composition in form of a blend with one or more additional polymeric resins.

According to one embodiment, the polycarbonate composition comprises one or more additional polymeric resins, optionally selected from polyesters and acrylonitrile-styrene-butadiene (ABS) polymers. According to one embodiment, the polycarbonate composition comprises a blend of the polycarbonate resin with one or more additional polymeric resins. The one or more additional polymeric resin may be a thermoplastic polymer. The one or more additional polymeric resin may be a polyester such as a polyethylene terephthalate (PET). The one or more additional may be an acrylonitrile-styrene-butadiene (ABS) polymer.

According to one embodiment, the polycarbonate composition comprises a polyester, preferably a polyethylene terephthalate (PET) in addition to the polycarbonate resin. According to one embodiment, the polycarbonate composition comprises a blend of one or more polycarbonate resin and one or more polyester, preferably PET.

According to one embodiment, the polycarbonate composition comprises an acrylonitrile-styrene-butadiene (ABS) polymer in addition to the polycarbonate resin. According to one embodiment, the polycarbonate composition comprises a blend of one or more polycarbonate resin and one or more acrylonitrile-styrene-butadiene (ABS) polymer.

However, it is also possible, and sometimes preferred, that the polycarbonate composition according to the invention contains at least one polycarbonate resin as the only polymeric resin(s). According to one embodiment, the polycarbonate composition contains at least one polycarbonate resin as the only polymeric resin(s).

According to one embodiment, the polycarbonate composition comprises the surface-treated calcium carbonate-containing material in an amount in the range of 0.1 to 12 wt.% (e.g. 1.0 to 10.0 wt.%), preferably 0.5 to 9.0 wt.% (e.g. 1.0 to 9.0 wt.%), more preferably 1.0 to 6.0 wt.%, and most preferably 2.0 to 5.0 wt.%, based on the total weight of the composition.

The inventors further surprisingly found that for a specific weight amount of the surface-treated calcium carbonate-containing material, e.g. in the range of 1.0 to 6.0 or 2.0 to 5.0 wt.%, the advantageous effect of the invention are particularly pronounced when used in combination with titanium dioxide. In particular, the inventors found that in these weight ranges the mechanical properties are maintained or improved, and the optical properties are particularly good. The inventors further found that, if the surface-treated calcium carbonate-containing material is not used in combination with titanium dioxide, a weight amount in the range of 1.0 to 10 wt.% or 1.0 to 9.0 wt.% of the material provides particularly advantageous results.

According to one embodiment, the polycarbonate composition comprises titanium dioxide in an amount of 0.1 to 10.0 wt.%, and preferably 1.0 to 5.0 wt.%, based on the total weight of the polycarbonate composition.

According to one embodiment, the polycarbonate composition comprises one or more additives in an amount of 0.1 to 10 wt.%, optionally from 0.1 to 5.0 wt.%, and optionally from 0.1 to 3.0 wt.%.

According to one embodiment, the polycarbonate composition comprises, based on the total weight of the polycarbonate composition:
a) at least 50 wt.% (e.g. 50 to 99.5 wt.%), preferably at least 75 wt.%, more preferably at least 85 wt.%, and even more preferably from 88 to 98 wt.%, of the polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material,
c) optionally from 0.1 to 10 wt.%, preferably 1.0 to 5.0 wt.%, of titanium dioxide, and
d) optionally from 0.1 to 10 wt.%, preferably from 0.1 to 5.0 wt.%, and more preferably from 0.1 to 3.0 wt.%, of additives.

It is to be understood that a skilled person can either select appropriate weight amounts of the components a) to d) to sum up to 100 wt.%, or, when the selected weight amounts of components a) to d) do not sum up to 100 wt.%, can add additional components (e.g. additional polymeric resins) as a balance to sum up to 100 wt.%. Where a composition is defined as "consisting of" the indicated components a) to d), a skilled person can select appropriate weight amounts to sum up to 100 wt.%.

According to one embodiment, the polycarbonate composition comprises, based on the total weight of the polycarbonate composition:
a) at least 50 wt.% (e.g. 50 to 99.5 wt.%), preferably at least 75 wt.%, more preferably at least 85 wt.%, and even more preferably from 88 to 98 wt.%, of the polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material,
c) from 0.1 to 10.0 wt.%, preferably 1.0 to 5.0 wt.%, of titanium dioxide, and
d) optionally from 0.1 to 10 wt.%, preferably from 0.1 to 5.0 wt.%, and more preferably from 0.1 to 3.0 wt.%, of additives.

According to one embodiment, the polycarbonate composition comprises, based on the total weight of the polycarbonate composition:
a) at least 50 wt.% (e.g. 50 to 99.5 wt.%), preferably at least 75 wt.%, more preferably at least 85 wt.%, and even more preferably from 88 to 98 wt.%, of the polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material,
c) from 0.1 to 10 wt.%, preferably 1.0 to 5.0 wt.%, of titanium dioxide, and
d) from 0.1 to 10 wt.%, preferably from 0.1 to 5.0 wt.%, and more preferably from 0.1 to 3.0 wt.%, of additives.

According to one embodiment, the polycarbonate composition comprises, based on the total weight of the polycarbonate composition:
a) at least 50 wt.% (e.g. 50 to 99.5 wt.%), preferably at least 75 wt.%, more preferably at least 85 wt.%, and even more preferably from 88 to 98 wt.%, of the polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material, and
d) from 0.1 to 10 wt.%, preferably from 0.1 to 5.0 wt.%, and more preferably from 0.1 to 3.0 wt.%, of additives.

According to one embodiment, the polycarbonate composition comprises, based on the total weight of the polycarbonate composition:
a) at least 78 wt.% (e.g. 78 to 99.5 wt.%), preferably at least 85 wt.%, and even more preferably from 88 to 98 wt.%, of the polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material, and
d) from 0.1 to 10 wt.%, preferably from 0.1 to 5.0 wt.%, and more preferably from 0.1 to 3.0 wt.%, of additives.

According to one embodiment, the polycarbonate composition comprises, based on the total weight of the polycarbonate composition:
a) at least 78 wt.% (e.g. 78 to 99.5 wt.%), preferably at least 85 wt.%, and even more preferably from 88 to 98 wt.%, of the polycarbonate resin,
b) from 8 to 12 wt.% of the surface-treated calcium carbonate-containing material, and
d) from 0.1 to 10 wt.%, preferably from 0.1 to 5.0 wt.%, and more preferably from 0.1 to 3.0 wt.%, of additives.

According to one embodiment, the polycarbonate composition (essentially) consists of, based on the total weight of the polycarbonate composition:
a) at least 73 wt.%, more preferably at least 85 wt.%, and even more preferably from 88 to 98 wt.%, of the at least one polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material,
c) optionally from 0.1 to 10.0 wt.%, preferably 1.0 to 5.0 wt.%, of titanium dioxide, and
d) optionally from 0.1 to 5.0 wt.%, and preferably from 0.1 to 3.0 wt.%, of additives.

According to one embodiment, the polycarbonate composition (essentially) consists of, based on the total weight of the polycarbonate composition:
a) at least 73 wt.%, more preferably at least 85 wt.%, and even more preferably from 88 to 98 wt.%, of the at least one polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material,
c) from 0.1 to 10.0 wt.%, preferably 1.0 to 5.0 wt.%, of titanium dioxide, and
d) optionally from 0.1 to 5.0 wt.%, and more preferably from 0.1 to 3.0 wt.%, of additives.

According to one embodiment, the polycarbonate composition (essentially) consists of, based on the total weight of the polycarbonate composition:
a) at least 73 wt.%, more preferably at least 85 wt.%, and even more preferably from 88 to 98 wt.%, of the at least one polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material,
c) from 0.1 to 10 wt.%, preferably 1.0 to 5.0 wt.%, of titanium dioxide, and
d) from 0.1 to 5.0 wt.%, and more preferably from 0.1 to 3.0 wt.%, of additives.

According to one embodiment, the polycarbonate composition (essentially) consists of, based on the total weight of the polycarbonate composition:
a) at least 84 wt.%, and even more preferably from 88 to 98 wt.%, of the at least one polycarbonate resin,
b) from 1.0 to 6.0 wt.%, and even more preferably 2.0 to 5.0 wt.%, of the surface-treated calcium carbonate-containing material,
c) from 1.0 to 5.0 wt.%, of titanium dioxide, and
d) from 0.1 to 5.0 wt.%, and more preferably from 0.1 to 3.0 wt.%, of additives.

According to one embodiment, the polycarbonate composition (essentially) consists of, based on the total weight of the polycarbonate composition:
a) from 83 to 98 wt.%, of the at least one polycarbonate resin,
b) from 0.1 to 12 wt.%, preferably 0.5 to 9.0 wt.%, more preferably 1.0 to 6.0 wt.%, and even more preferably 2.0 to 5.0 wt.%, of the surface-treated calcium carbonate-containing material, and
d) from 0.1 to 5.0 wt.%, and more preferably from 0.1 to 3.0 wt.%, of additives.

According to one embodiment, the polycarbonate composition (essentially) consists of, based on the total weight of the polycarbonate composition:
a) from 89 to 98 wt.%, of the at least one polycarbonate resin,
b) from 1.0 to 6.0 wt.%, and preferably 2.0 to 5.0 wt.%, of the surface-treated calcium carbonate-containing material, and
d) from 0.1 to 5.0 wt.%, and more preferably from 0.1 to 3.0 wt.%, of additives.

According to one embodiment, the polycarbonate composition (essentially) consists of, based on the total weight of the polycarbonate composition:
a) from 83 to 98 wt.%, of the at least one polycarbonate resin,
b) from 8 to 12 wt.% of the surface-treated calcium carbonate-containing material, and
d) from 0.1 to 5.0 wt.%, and more preferably from 0.1 to 3.0 wt.%, of additives.

According to one embodiment, the polycarbonate composition consists of, based on the total weight of the polycarbonate composition:
a) 86 to 98 wt.%, of the at least one polycarbonate resin,
b) from 1.0 to 6.0 wt.%, of the surface-treated calcium carbonate-containing material,
c) optionally from 1.0 to 5.0 wt.%, of titanium dioxide, and
d) optionally from 0.1 to 3.0 wt.%, of additives.

According to one embodiment, the polycarbonate composition consists of, based on the total weight of the polycarbonate composition:
a) 86 to 98 wt.%, of the at least one polycarbonate resin,
b) from 1.0 to 6.0 wt.%, of the surface-treated calcium carbonate-containing material,
c) from 1.0 to 5.0 wt.%, of titanium dioxide, and
d) from 0.1 to 3.0 wt.%, of additives.

The polycarbonate composition according to the invention may have a specific melt flow rate.

According to one embodiment, the polycarbonate composition has a melt flow rate in the range of 1 to 40 g/10 min, optionally 5 to 30 g/10 min, measured according to ISO 1133 but at a modified temperature of 260 °C and a load of 2.16 kg.

According to one embodiment, the polycarbonate composition has a melt flow rate in the range of 5 to 40 g/10 min, optionally 10 to 30 g/10 min, measured according to ISO 1133 (300°C / 1.2kg).

According to one embodiment, the polycarbonate composition does not contain titanium dioxide, and has one or more of the following optical properties:
(i) L* according to DIN 6174 of above 70, and preferably of above 74, and
(ii) b* according to DIN 6174 of below 5.5, preferably of below 5.0.

According to one embodiment, the polycarbonate composition does not contain titanium dioxide, and has the following optical properties:
(i) L* according to DIN 6174 of above 70, and preferably of above 74, and
(ii) b* according to DIN 6174 of below 5.5, preferably of below 5.0.

According to one embodiment, the polycarbonate composition does not contain titanium dioxide, and has one or more of the following optical properties:
(i) L* according to DIN 6174 of above 70, and preferably of above 74, and
(ii) b* according to DIN 6174 of below 4.0, preferably of below 3.8.

According to one embodiment, the polycarbonate composition does not contain titanium dioxide, and has the following optical properties:
(i) L* according to DIN 6174 of above 70, and preferably of above 74, and
(ii) b* according to DIN 6174 of below 4.0, preferably of below 3.8.

### The article according to the invention

In one aspect of the present invention, an article is provided which comprises the polycarbonate composition according to the invention.

According to a preferred embodiment, the article is an injection molded article, a compression molded article, or a sheet.

According to one embodiment, the article comprises the polycarbonate composition in an amount of at least 50 wt.%, optionally of at least 75 wt.%, and optionally of at least 95 wt.% (e.g. 95 to 99.9 wt.%).

According to one embodiment, the article consists of the polycarbonate composition.

The article may be, but is not limited to, an electronic component, a construction material, a data storage, an automotive component, an aircraft component, a mobile phone component, a security component, a container, a bottle, a sheet, or a component for a medical application.

### The process according to the invention

One aspect of the invention provide a process for preparing a polycarbonate composition according to the invention. The process comprises the steps of:
i) surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof, to obtain a surface-treated calcium carbonate-containing material;
ii) compounding the surface-treated calcium carbonate-containing material with a polycarbonate resin, and optionally with one or more additives and/or titanium dioxide, to obtain a polycarbonate composition,
iii) extruding the polycarbonate composition.

In step i), a calcium carbonate-containing material is surface-treated with at least one hydrophobizing agent selected from the group consisting of aliphatic-substituted succinic anhydrides, carboxylic acid- and/or anhydride-functional polysiloxanes, and mixtures thereof, to obtain a surface-treated calcium carbonate-containing material.

Regarding the features of the calcium carbonate-containing material, the at least one hydrophobizing agent, and the surface-treated calcium carbonate-containing material, it is referred to the definitions, the embodiments, and the preferred embodiments, as defined herein above and as defined in the claims.

The calcium carbonate-containing material and/or the at least one hydrophobizing agent may be provided in any form which is suitable for treating the surface of the calcium carbonate-containing material with the at least one hydrophobizing agent. Preferably, the calcium carbonate-containing material is provided in dry form and/or powder form. The at least one hydrophobizing agent may be provided as a pure solid (e.g. in form of powder, pellets, granules, etc) or in form of a liquid.

In case the at least one hydrophobizing agent is provided in solid form, step i) may be carried out at a temperature equal or above the melting point of the at least one hydrophobizing agent (e.g. at least 2°C above the melting point of the at least one hydrophobizing agent).

The surface of the calcium carbonate-containing material may be treated by mixing the material with the at least one hydrophobizing agent over a time period of 1 min to 2 h, optionally 10 min to 30 min (e.g. about 20 min). The calcium carbonate-containing material may be preconditioned, e.g. at the treating temperature, before being treated with the at least one hydrophobizing agent.

The surface-treating of the calcium carbonate-containing material can be carried out in any mixing device, container, or reactor which is known in the art to be suitable for such purposes.

In step ii), the surface-treated calcium carbonate-containing material is compounded with a polycarbonate resin, and optionally with one or more additives and/or titanium dioxide, to obtain a polycarbonate composition.

The polycarbonate resin may be ground prior to step ii), optionally anterior the ground polycarbonate resin passes a 2 mm or 1 mm sieve.

The compounding step ii) may be carried out in any device which is suitable for such a purpose. For example, step ii) can be carried out in an extruder such as a twin-screw extruder.

The polycarbonate resin, the surface-treated calcium carbonate-containing material, and the optional one or more additives and/or titanium dioxide may be premixed and said simultaneously to the extruder for example via the main feeder. Alternatively, the polycarbonate resin may be fed to the extruder via the main feeder and the surface-treated calcium carbonate-containing material, and the optional one or more additives and/or titanium dioxide, may be added via one or more side feeders.

The person of skill in the art can select a suitable temperature, feeding speed, screw speed, and conveyer speed for the compounding step ii). For example, the temperature may be in the range of 200°C to 300°C, optionally 230°C to 280°C, optionally 240°C to 270°C (e.g. about 250°C). For example, the feeding speed may be in the range of 5 to 15%, optionally 8 to 13% (e.g. about 11%). For example, the screw speed may be in the range of 10 to 50 rpm, optionally in the range of 15 to 45 rpm, optionally in the range of 20 to 40 rpm, and optionally in the range of 25 to 35 rpm (e.g. about 30 rpm). For example, the conveyors speed may be in the range of 0.5 to 3.0 rpm, optionally in the range of 1.0 to 2.0 rpm, and optionally may be about 1.5 rpm.

In step iii), the polycarbonate composition is extruded. A skilled person knows how to extrude a polycarbonate composition, e.g. from an extruder operating under the above described conditions.

During and/or after step iii), the process may further comprise a step of forming and/or cooling the polycarbonate composition. For example, the process may further comprise a step of injection molding the polycarbonate composition.

### Use according to the invention

Another aspect of the invention provides a use of a surface-treated calcium carbonate-containing material as defined herein as a filler a polycarbonate composition.

The surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof.

Regarding the features of the calcium carbonate-containing material, the at least one hydrophobizing agent, the polycarbonate composition, and the surface-treated calcium carbonate-containing material, it is referred to the definitions, the embodiments, and the preferred embodiments, as defined herein above and as defined in the claims. These definitions, embodiments, and preferred embodiments are also disclosed herein in connection for the use according to the invention.

As described herein above, the inventors have surprisingly found that the surface-treated calcium carbonate-containing material as defined herein is suitable for use as a filler for a polycarbonate composition. In particular, it has been found that addition of the surface-treated calcium carbonate-containing material as defined herein maintains or even improves the properties of a polycarbonate composition. The inventors have further found that the surface-treated calcium carbonate-containing material can be used in combination with, or for at least partially substituting, a titanium dioxide pigment in a polycarbonate composition while maintaining the properties of the filled polycarbonate composition.

According to one embodiment, the surface-treated calcium carbonate-containing material is used for improving the mechanical and/or optical properties of a polycarbonate composition.

According to one embodiment, the surface-treated calcium carbonate-containing material is used for improving the mechanical properties of a polycarbonate composition, and preferably improving the tensile properties (e.g. increasing the maximum strength and/or the elongation at break), the rheological properties (e.g. reducing and/or stabilizing the melt flow rate), and/or improving the impact properties (e.g. increasing the impact strength) of the polycarbonate composition.

The mechanical properties may be improved compared to a polycarbonate composition which does not contain the surface-treated calcium carbonate-containing material as defined herein, under otherwise identical conditions. In this case, "under otherwise identical conditions" means that the weight amount of the surface-treated calcium carbonate-containing material in the polycarbonate composition is replaced by an identical weight amount of the polycarbonate resin.

Additionally or alternatively, the mechanical properties may be improved compared to the use of a calcium carbonate-containing material which is not surface-treated, under otherwise identical conditions.

Additionally or alternatively, the mechanical properties may be improved compared to the use of a surface-treated calcium carbonate-containing material which is obtained by surface-treating the calcium carbonate-containing material with a hydrophobizing agent (e.g. a fatty acid mixture) other than the at least one hydrophobizing as defined herein, under otherwise identical conditions. In this case, the use is preferably compared with a surface-treated calcium carbonate-containing material which is obtained by surface-treating a calcium carbonate-containing material with a fatty acid or mixtures thereof (e.g. stearic acid and palmitic acid, e.g. in a ratio 40:60), under otherwise identical conditions for the use.

According to one embodiment, the surface-treated calcium carbonate-containing material is used for improving the mechanical and/or optical properties of a polycarbonate composition, compared to the use of a calcium carbonate-containing material which is not surface-treated (e.g. a natural ground calcium carbonate), under otherwise identical conditions, and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the surface-treated calcium carbonate-containing material is used for improving the mechanical and/or optical properties of a polycarbonate composition, compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the surface-treated calcium carbonate is used for improving the mechanical properties and/or optical properties by one or more of the following:
increasing the maximum strength according to ISO 527,
increasing the elongation at break according to ISO 527,
increasing the impact resistance according to ISO 179,
reducing the melt flow rate according to ISO 1133 (measured at 260°C with a load of 2.16 kg) decreasing the b* value according to DIN 6174, and
increasing the L* value according to DIN 6174.

According to one embodiment, the surface-treated calcium carbonate is used for improving the mechanical properties and/or optical properties by one or more of the following:
increasing the maximum strength according to ISO 527,
increasing the elongation at break according to ISO 527,
increasing the impact resistance according to ISO 179,
reducing the melt flow rate according to ISO 1133 (measured at 260°C with a load of 2.16 kg) decreasing the b* value according to DIN 6174, and
increasing the L* value according to DIN 6174,
when compared to the use of a calcium carbonate-containing material which is not surface-treated (e.g. a natural ground calcium carbonate), under otherwise identical conditions, and/or when compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the surface-treated calcium carbonate is used for improving the mechanical properties and/or optical properties by one or more of the following :
increasing the maximum strength according to ISO 527,
increasing the elongation at break according to ISO 527,
increasing the impact resistance according to ISO 179,
reducing the melt flow rate according to ISO 1133 (measured at 260°C with a load of 2.16 kg) decreasing the b* value according to DIN 6174, and
increasing the L* value according to DIN 6174,
compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the surface-treated calcium carbonate-containing material is used for improving the tensile properties of a polycarbonate composition. According to one embodiment, the tensile properties of a polycarbonate composition are improved by increasing the maximum strength (in N/mm²) according to ISO 527 by at least 2% (e.g. 2 to 1000%), preferably by at least 5% (e.g. 5 to 500%), compared to the use of a surface-treated calcium carbonate-containing material which is obtained by surface-treating a calcium carbonate-containing material with a hydrophobizing agent other than the at least one hydrophobizing agent as defined herein (e.g. a fatty acid or mixture thereof), under otherwise identical conditions.

According to one embodiment, the tensile properties of a polycarbonate composition are improved by increasing the maximum strength (in N/mm²) according to ISO 527 by at least 2% (e.g. 2 to 1000%), preferably by at least 5% (e.g. 5 to 500%), compared to the use of a surface-treated calcium carbonate-containing material which is obtained by surface-treating a calcium carbonate-containing material with a hydrophobizing agent other than the at least one hydrophobizing agent as defined herein (e.g. a fatty acid or mixture thereof), under otherwise identical conditions,
and wherein the surface-treated calcium carbonate is used in an amount of 5 to 12 wt.%, and preferably 5 to 10 wt.%, based on the total weight of the filled polycarbonate composition.

According to one embodiment, the tensile properties of a polycarbonate composition are improved by increasing the elongation at break (in %) according to ISO 527 by at least 20% (e.g. 20 to 500%), preferably by at least 50% (e.g. 50 to 300%), compared to the use of a surface-treated calcium carbonate-containing material which is obtained by surface-treating a calcium carbonate-containing material with a hydrophobizing agent other than the at least one hydrophobizing agent as defined herein (e.g. a fatty acid or mixture thereof), under otherwise identical conditions.

According to one embodiment, the tensile properties of a polycarbonate composition are improved by increasing the elongation at break (in %) according to ISO 527 by at least 20% (e.g. 20 to 500%), preferably by at least 50% (e.g. 50 to 300%), compared to the use of a surface-treated calcium carbonate-containing material which is obtained by surface-treating a calcium carbonate-containing material with a hydrophobizing agent other than the at least one hydrophobizing agent as defined herein (e.g. a fatty acid or mixture thereof), under otherwise identical conditions, wherein the polycarbonate composition does not contain titanium dioxide.

According to one embodiment, the surface-treated calcium carbonate-containing composition is used for improving the impact properties of a polycarbonate composition. According to one embodiment, the impact properties of a polycarbonate composition are improved by increasing the impact strength (in kJ/m²) according to ISO 179 by at least 2% (e.g. 2 to 2000%), preferably by at least 5% (e.g. 5 to 1000%), and more preferably by at least 25% (e.g. 25 to 1000%), compared to the use of a calcium carbonate-containing material which is not surface-treated (e.g. a natural ground calcium carbonate), under otherwise identical conditions, and/or compared to the use of a surface-treated calcium carbonate-containing material which is obtained by surface-treating a calcium carbonate-containing material with a hydrophobizing agent other than the at least one hydrophobizing agent as defined herein (e.g. a fatty acid or mixture thereof), under otherwise identical conditions.

According to one embodiment, the surface-treated calcium carbonate-containing composition is used for improving the impact properties of a polycarbonate composition. According to one embodiment, the impact properties of a polycarbonate composition are improved by increasing the impact strength (in kJ/m²) according to ISO 179 by at least 2% (e.g. 2 to 2000%), preferably by at least 5% (e.g. 5 to 1000%), and more preferably by at least 25% (e.g. 25 to 1000%), compared to the use of a calcium carbonate-containing material which is not surface-treated (e.g. a natural ground calcium carbonate), under otherwise identical conditions, and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions,
and wherein the polycarbonate composition does not contain titanium dioxide.

According to one embodiment, the surface-treated calcium carbonate-containing composition is used for improving the rheological properties of a polycarbonate composition. According to one embodiment, the rheological properties are improved by reducing the melt flow rate according to ISO 1133 (using a temperature of 260°C and a load of 2.16 kg) by at least 5% (e.g. 5 to 90%), optionally at least 10%, and optionally at least 25%, compared to the use of a calcium carbonate-containing material which is not surface-treated with at least one hydrophobizing agent as defined herein (e.g. a natural ground calcium carbonate), and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the rheological properties are improved by reducing the melt flow rate according to ISO 1133 (300°C; 1.2 kg) by at least 5% (e.g. 5 to 90%), optionally at least 10%, and optionally at least 25%, compared to the use of a calcium carbonate-containing material which is not surface-treated with at least one hydrophobizing agent as defined herein (e.g. a natural ground calcium carbonate), and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions,
and wherein the polycarbonate composition does not contain titanium dioxide.

According to one embodiment, the surface-treated calcium carbonate-containing material is used for improving the optical properties of a polycarbonate composition, and preferably for decreasing the yellowness, preferably characterized by the b* value according to DIN 6174, of a polycarbonate composition comprising a calcium carbonate-containing filler material and/or by increasing the lightness, preferably characterized by the L* value according to DIN 6174, compared to the use of a calcium carbonate-containing material which is not surface-treated with at least one hydrophobizing agent as defined herein (e.g. a natural ground calcium carbonate), and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the optical properties are improved by reducing the b* value according to DIN 6174 by at least 5% (e.g. 5 to 90%), preferably at least 10%, and optionally at least 25%, compared to the use of a calcium carbonate-containing material which is not surface-treated with at least one hydrophobizing agent as defined herein (e.g. a natural ground calcium carbonate), and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the optical properties are improved by increasing the L* value according to DIN 6174 by at least 2% (e.g. 2 to 50%), compared to the use of a calcium carbonate-containing material which is not surface-treated with at least one hydrophobizing agent as defined herein (e.g. a natural ground calcium carbonate), and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions.

According to one embodiment, the optical properties are improved by increasing the L* value according to DIN 6174 by at least 2% (e.g. 2 to 50%), compared to the use of a calcium carbonate-containing material which is not surface-treated with at least one hydrophobizing agent as defined herein (e.g. a natural ground calcium carbonate), and/or compared to the use of a surface-treated calcium carbonate-containing material which is obtained by surface-treating the calcium carbonate-containing material with a hydrophobizing agent other than the at least one hydrophobizing agent as defined herein (e.g. a fatty acid or mixture thereof), under otherwise identical conditions,
wherein the polycarbonate composition does not contain titanium dioxide,
wherein the surface-treated calcium carbonate-containing material as defined herein is used in an amount in the range of 8 to 12 wt.%, based on the total weight of the polycarbonate composition.

According to one preferred embodiment, the surface-treated calcium carbonate-containing material is used as filler for a polycarbonate composition comprising titanium dioxide.

According to one preferred embodiment, the surface-treated calcium carbonate-containing material is used as filler for a polycarbonate composition comprising titanium dioxide, wherein the surface-treated calcium carbonate-containing material is used for partially substituting the titanium dioxide.

### Surface-treated calcium carbonate-containing material according to the invention

Another aspect of the present invention provides a surface-treated calcium carbonate-containing material, wherein the surface-treated calcium carbonate-containing material is obtained by surface-treating a calcium carbonate-containing material with at least one hydrophobizing agent selected from the group consisting of carboxylic acid- and/or anhydride-functional polysiloxanes.

The inventors found that a calcium carbonate-containing material, which has been surface-treated with a carboxylic acid- and/or anhydride-functional polysiloxane as a hydrophobizing agent, can be used as a filler in polycarbonate with the advantages as described herein.

Embodiments and preferred embodiments of the surface-treated calcium carbonate-containing material, wherein the at least one hydrophobizing agent is selected from the group consisting of carboxylic acid- and/or anhydride-functional polysiloxanes, are defined above in the subsection "the surface-treated calcium carbonate-containing material" and in the claims. These embodiments, preferred embodiments and definitions are also disclosed herein for the inventive surface-treated calcium carbonate as such, i.e. not in combination with the other components of the polycarbonate composition.

Thus, embodiments, preferred embodiments and definitions of the calcium carbonate-containing material, the at least one hydrophobizing agent, the amount of the at least one hydrophobizing agent, the reactions products of the at least one hydrophobizing agent, the moisture pick-up susceptibility of the surface-treated calcium carbonate-containing material, the residual moisture content of the surface-treated calcium carbonate-containing material, and the specific surface area and/or particle size of the surface-treated calcium carbonate-containing material are also disclosed herein for the inventive surface-treated calcium carbonate as such, i.e. not in combination with the other components of the polycarbonate composition, with the requirement that the at least one hydrophobizing agent is selected from the group consisting of carboxylic acid- and/or anhydride-functional polysiloxanes.

In addition to the surface-treatment with the polysiloxane as defined herein, the surface-treated calcium carbonate-containing material can be surface-treated with an aliphatic-substituted succinic anhydride as defined herein. Furthermore, the calcium carbonate-containing material can be surface-treated with an additional surface-treating agent before, during, and/or after being surface-treated with the polysiloxane as defined herein.

Further embodiments of the surface-treated calcium carbonate-containing material according to the invention are defined in the following numbered embodiments, which can be combined with the other embodiments of the surface-treated calcium carbonate-containing material as defined herein.
[1] A surface-treated calcium carbonate-containing material, wherein the surface-treated calcium carbonate-containing material is obtained by surface-treating a calcium carbonate-containing material with at least one hydrophobizing agent selected from the group consisting of carboxylic acid- and/or anhydride-functional polysiloxanes.
[2] The surface-treated calcium carbonate-containing material according to embodiment [1], wherein the carboxylic acid- and/or anhydride-functional polysiloxanes have a viscosity from 10 to 1200 cSt, and preferably from 10 to 200 cSt, and/or wherein the carboxylic acid- and/or anhydride-functional polysiloxanes have a molecular weight in the range of 400 to 50 000 g/mol, and preferably in the range of 500 to 15 000 g/mol.
[3] The surface-treated calcium carbonate-containing material according to embodiment [1] or [2], wherein the carboxylic acid- and/or anhydride-functional polysiloxanes are carboxylic acid-functional polysiloxanes selected from the group of carboxylalkyl-terminated polysiloxanes, preferably from the group of carboxyl-C₁-C₂₀-alkyl-terminated polysiloxanes, and more preferably from the group of carboxyl-C₁-C₂₀-alkyl-terminated poly(dimethylsiloxanes) (e.g. carboxyl decyl-terminated poly(dimethylsiloxane)), or wherein the carboxylic acid- and/or anhydride-functional polysiloxanes are anhydride-functional polysiloxanes selected from the group of succinic anhydride alkyl-terminated polysiloxanes, preferably from the group of succinic anhydride C₁-C₂₀-alkyl-terminated polysiloxanes, and more preferably from the group of succinic anhydride C₁-C₂₀-alkyl-terminated poly(dimethylsiloxanes).
[4] The surface-treated calcium carbonate-containing material according to embodiment [1] or [2], wherein the carboxylic acid- and/or anhydride-functional polysiloxanes have a structure according to Formula (I): 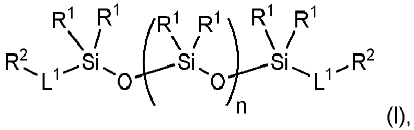
   wherein
      R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
      R² is each independently selected from a carboxyl group and anhydride groups, preferably from a carboxyl group and cyclic anhydride groups (e.g. succinic anhydride, phthalic anhydride, a maleic anhydride, malonic anhydride, etc.), and more preferably from a carboxyl group and succinic anhydride,
      L¹ is a linking moiety, and preferably is an optionally substituted aliphatic chain, and
      n is an integer from 1 to 1000 (e.g. from 1 to 500 or from 10 to 100), and optionally
   wherein the carboxylic acid- and/or anhydride-functional polysiloxanes have a structure according to Formula (II): 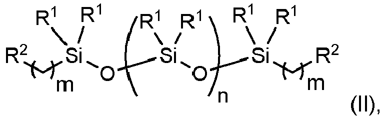
   wherein
      R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
      R² is each independently selected from a carboxyl group and anhydride groups, preferably from a carboxyl group and cyclic anhydride groups (e.g. succinic anhydride, phthalic anhydride, a maleic anhydride, malonic anhydride, etc.), and more preferably from a carboxyl group and succinic anhydride,
      m is an integer from 1 to 25 (e.g. 1 to 15), and
      n is an integer from 1 to 1000 (e.g. from 1 to 500 or from 10 to 100).
[5] The surface-treated calcium carbonate-containing material according to embodiment [1] or [2], wherein the carboxylic acid- and/or anhydride-functional polysiloxanes are anhydride-functional polysiloxanes having a structure according to Formula (III): 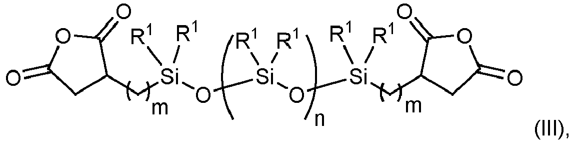
   wherein
      R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
      m is an integer from 1 to 25 (e.g. 1 to 15), and
      n is an integer from 1 to 1000 (e.g. from 1 to 500 or from 10 to 100), and optionally wherein the carboxylic acid- and/or anhydride-functional polysiloxanes are anhydride-functional poly(dimethylsiloxanes) having a structure according to Formula (III): 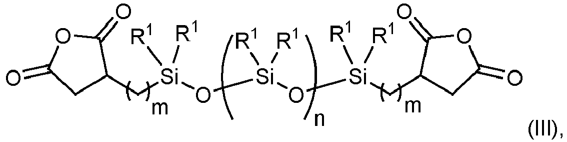
   wherein
      R¹ is methyl,
      m is an integer from 1 to 25 (e.g. 1 to 15), and
      n is an integer from 1 to 1000 (e.g. from 1 to 500 or from 10 to 100).
[6] The surface-treated calcium carbonate-containing material according to embodiment [5], wherein the anhydride-functional polysiloxanes have a viscosity from 10 to 500 cSt, and preferably from 50 to 200 cSt, and/or wherein the anhydride-functional polysiloxanes have a molecular weight in the range of 400 to 10 000 g/mol, and preferably in the range of 500 to 1 000 g/mol.
[7] The surface-treated calcium carbonate-containing material according to embodiment [1] or [2], wherein the carboxylic acid- and/or anhydride-functional polysiloxanes are carboxylic acid-functional polysiloxanes having a structure according to Formula (IV): 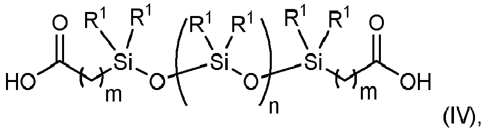
   wherein
      R¹ is each independently selected from hydrogen, optionally substituted alkyl groups and optionally substituted aryl groups, and preferably from alkyl groups and aryl groups, and more preferably from alkyl groups (e.g. C₁-C₄ alkyl groups),
      m is an integer from 1 to 25 (e.g. 1 to 15), and
      n is an integer from 1 to 1000 (e.g. from 1 to 500 or from 10 to 100), and optionally wherein the carboxylic acid- and/or anhydride-functional polysiloxanes are carboxylic acid-functional poly(dimethyl)siloxanes having a structure according to Formula (IV): 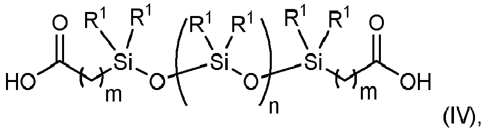
   wherein
      R¹ is methyl,
      m is an integer from 1 to 25 (e.g. 1 to 15), and
      n is an integer from 1 to 1000 (e.g. from 1 to 500 or from 10 to 100).
[8] The surface-treated calcium carbonate-containing material according to embodiment [7], wherein the carboxylic acid-functional polysiloxanes have a viscosity from 10 to 1200 cSt, preferably from 10 to 100 cSt, and/or wherein the carboxylic acid-functional polysiloxanes have a molecular weight in the range of 500 to 50 000 g/mol, and preferably in the range of 500 to 15 000 g/mol.
[9] The surface-treated calcium carbonate-containing material according to any one of embodiments [1] to [8], wherein the calcium carbonate-containing material is a natural ground calcium carbonate, a precipitated calcium carbonate, or a mixture thereof.
[10] The surface-treated calcium carbonate-containing material according to any one of embodiments [1] to [9], wherein the calcium carbonate-containing material is selected from calcium carbonate containing minerals selected from the group consisting of dolomite, marble, chalk, limestone and mixtures thereof, preferably from marble, limestone or a mixture thereof, and most preferably is marble.
[11] The surface-treated calcium carbonate-containing material according to any one of embodiments [1] to [10], wherein the calcium carbonate-containing material has a calcium carbonate content of at least 75.0 wt.% (e.g. 75.0 to 99.9 wt.%), more preferably at least 90.0 wt.% (e.g. 90.0 to 99.9 wt.%), and most preferably at least 95 wt.-% (e.g. 95.0 to 99.9 wt.%), based on the total weight of the calcium carbonate-containing material.
[12] The surface-treated calcium carbonate-containing material according to any one of embodiments [1] to [11], wherein the calcium carbonate-containing material has weight-median particle size dso in the range of 0.1 to 15 micrometers, preferably 0.3 to 5.0 micrometers, and more preferably 0.5 to 3.0 micrometers (e.g. 0.5 to 2.0 micrometers, 1.5 to 2.0 micrometers, or 0.5 to 1.0 micrometers) and a weight-based top cut particle size d₉₈ in the range of 0.5 to 40 micrometers, preferably 1.0 to 20 micrometers, and more preferably 1.0 to 10 micrometers (e.g. 2.5 to 9.0 micrometers, 2.5 to 3.5 micrometers, or 7.0 to 9.0 micrometers), and a specific surface area of from 0.5 m²/g to 40 m²/g, preferably from 1.0 m²/g to 35 m²/g, and more preferably from 2 m²/g to 20 m²/g (e.g. 2 m²/g to 10 m²/g, 2 m²/g to 5 m²/g, or 5 m²/g to 10 m²/g) as measured using nitrogen and the BET method. Most preferably, the calcium carbonate-containing material has a specific surface area of from 2.4 to 15 m²/g.
[13] The surface-treated calcium carbonate-containing material according to any one of embodiments [1] to [12], wherein the amount of the at least one hydrophobizing agent used for surface-treating the calcium carbonate-containing material is in the range of 0.1 to 10.0 wt.%, preferably 0.1 to 6.0 wt.%, more preferably 0.3 to 5.0 wt.%, and even more preferably 0.5 to 3.0 wt.%, based on the weight of the calcium carbonate-containing material, or wherein the amount of the at least one hydrophobizing agent used for surface-treating the calcium carbonate-containing material is in the range of 0.1 to 0.4 wt.% / m² (BET specific surface area of calcium carbonate-containing material), based on the weight and the BET specific surface area of the calcium carbonate-containing material.
[14] The surface-treated calcium carbonate-containing material according to any one of embodiments [1] to [13], wherein the surface-treated calcium carbonate-containing material has a moisture pick-up susceptibility of below 2.0 mg (H₂O) / g (material), and preferably below 1.2 mg (H₂O) / g (material), and/or wherein the surface-treated calcium carbonate-containing material has a residual moisture content of at most 0.5 wt.%, preferably of at most 0.3 wt.%, as determined by TGA analysis.
[15] A polycarbonate composition comprising a surface-treated calcium carbonate-containing material according to any one of the embodiments [1] to [14], wherein the polycarbonate composition optionally comprises titanium dioxide, and optionally one or more additives.

The polycarbonate composition according to embodiment [15] may be further defined as disclosed herein.

### EXAMPLES SECTION

### 1. General information

### BET specific surface area (SSA) of a material

The specific surface area (in m²/g) of the mineral filler is determined using the BET method (using nitrogen as adsorbing gas), which is well known to the skilled man (ISO 9277:2010). The total surface area (in m²) of the mineral filler may be obtained by multiplication of the specific surface area and the mass (in g) of the mineral filler prior to treatment.

### Amount of surface-treatment layer

The amount of the at least one hydrophobizing agent on the calcium carbonate-containing material is calculated theoretically from the values of the BET of the untreated calcium carbonate-containing filler material and the amount of at least one hydrophobizing agent that are used for the surface-treatment.

The amount of the at least one hydrophobizing agent in the surface-treated calcium carbonate-containing material can be determined by e.g. by thermogravimetric analysis (TGA). TGA can be performed using a Mettler Toledo TGA/DSC3+ based on a sample of 250 ± 50 mg in a 900 µL crucible and scanning temperatures from 25 to 400 °C at a rate of 20°C/minute under an air flow of 80 ml/min. The total volatiles associated with calcium carbonate-containing material and evolved over a temperature range of 25 to 280 °C or 25 to 400 °C is characterised according to % mass loss of the sample over a temperature range as read on a thermogravimetric (TGA) curve. The total weight of the at least one hydrophobizing agent on the accessible surface area of the calcium carbonate-containing material can be determined by thermogravimetric analysis by mass loss between 105 °C to 400 °C, whereby the obtained value of mass loss between 105°C to 400°C is substracted with the mass loss (105 to 400°C) of the not-surface-treated calcium carbonate-containing material for correction.

### Particle size distribution (mass % particles with a diameter < X) and weight median diameter (d₅₀) of a particulate material

The "particle size" of particulate materials herein is described by its distribution of particle sizes *dₓ*. Therein, the value *dₓ* represents the diameter relative to which x % by weight of the particles have diameters less than *dₓ*. This means that, for example, the *d*₂₀ value is the particle size at which 20 wt.-% of all particles are smaller than that particle size. The *d*₅₀ value is thus the weight median particle size, i.e. 50 wt.-% of all particles are smaller than this particle size. For the purpose of the present invention, the particle size is specified as weight median particle size *d*₅₀(wt.) unless indicated otherwise.

The weight-based particle sizes is determined by sedimentation analysis. The weight-based particle sizes is determined by using a Sedigraph^{™} 5100 or 5120 instrument of Micromeritics Instrument Corporation. The method and the instrument are known to the skilled person and are commonly used to determine the particle size of fillers and pigments. The measurements are carried out in an aqueous solution of 0.1 wt.-% Na₄P₂O₇.

### Optical properties - L*a*b* values

The CIELAB color space is determined according to DIN 6174 on polymer discs (40 x 40 x 5 mm) with a Spectro-guide 45/0 gloss device from BYK-Gardner GmbH.

### Melt Flow Rate

The melt flow rate is measured according to ISO 1133-1:2011 on a CEAST Instrument equipped with the software Ceast View 6.15 4C. The length of the die is 8 mm and its diameter is 2.095 mm. The temperature and the load was modified compared to the ISO standard in that a temperature of 260°C and a load of 2.16 kg was used. Measurements are performed at 260 °C with 240 s of preheating without load, then a nominal load of 2.16 kg is used and the melt flow is measured along 20 mm.

### Tensile properties

The tensile properties are measured according to IS0527-1:2012 Type BA(1:2) on a Allround Z020 traction device from Zwick Roell. Measurements are performed with an initial load of 0.1 MPa. For the measurement of the E-modulus a speed of 1 mm/min is used, then the speed is increased to 50 mm/min. The tensile strain at break is obtained under standard conditions. All measurements are performed on samples that have been stored under similar conditions after preparation.

### Impact properties

The impact properties are measured according to ISO 179-1eA:2010-11 on a HIT5.5P device from Zwick Roell. Measurements are performed on notched samples with a hammer of 4 J. All measurements are performed on samples that have been stored under similar conditions after preparation.

### 2. Materials

### 2.1 Polycarbonate resin

The polycarbonate resin used is a polycarbonate (CAS No. 25037-45-0) PC Makrolon 2458 (MFI = 19 g/10min at 300 °C with 1.2 kg) commercially available from Covestro AG.

### 2.2 Hydrophobizing agent 01 (comparative): Fatty acid mixtures

The hydrophobizing agent 01 (comparative) is a fatty acid mixture consisting of about 40% stearic acid and about 60% palmitic acid.

### 2.3 Hydrophobizing agent 02 (according to the invention): Aliphatic-substituted succinic anhydride

The hydrophobizing agent 02 is a mono-substituted alkenyl succinic anhydride (2,5-Furandione, dihydro-, mono-C₁₅₋₂₀-alkenyl derivs., CAS No. 68784-12-3). It is a blend of mainly branched octadecenyl succinic anhydrides (CAS #28777-98-2) and mainly branched hexadecenyl succinic anhydrides (CAS #32072-96-1). More than 80% of the blend is branched octadecenyl succinic anhydrides. The purity of the blend is > 95wt.%, based on the total weight of the blend. The residual olefin content is below 3 wt.%, based on the total weight of the blend.

### 2.4 Hydrophobizing agent 03 (according to the invention): Carboxylic acid-functional polydimethylsiloxane

The hydrophobizing agent 03 is a (carboxyl decyl)-terminated polydimethylsiloxane (CAS No. 58130-04-4) having a viscosity of 15-30 cSt, a molecular weight of about 1000 Da, and a specific gravity of 0.96.

### 2.5 Hydrophobizing agent 04 (according to the invention): Succinic anhydride functional Polydimethylsiloxane

The hydrophobizing agent 04 is a succinic anhydride-terminated polydimethylsiloxane (CAS No. 161208-23-8) having a viscosity of 75-100 cSt, a molecular weight of 600-800 Da, and a specific gravity of 1.06.

### 2.6 Calcium carbonate-containing material CC1 (comparative)

The calcium carbonate CC1 is an untreated dry ground marble from Italy (dso = 1.7 micrometers, d₉₈ = 8 micrometers (measured with Sedigraph), BET SSA = 4.1 m²/g ).

### 2.7 Surface-treated calcium carbonate-containing material CC2 (comparative)

The calcium carbonate CC2 is a dry ground marble from Italy (dso = 1.7 micrometers, d₉₈ = 8 micrometers (measured with Sedigraph) , BET SSA = 4.1 m²/g ) which has been surface-treated with the hydrophobizing agent 01 in an amount of 1.1 wt.%, based on the total weight of the calcium carbonate.

Surface treatment was done in a Somakon MP-LB high shear mixer. The calcium carbonate powder was conditioned inside the mixer for 10 minutes at the desired temperature (120 °C, 600 rpm, scraper speed 75%), then the hydrophobizing agent 01 was added under the above mentioned mixing conditions, and treatment was done by continuing the mixing for 15 minutes. The surface-treated calcium carbonate was then left to cool down and was collected.

### 2.8 Surface-treated calcium carbonate-containing material CC3 (according to the invention)

The surface-treated calcium carbonate-containing material CC3 is a dry ground marble from Italy (dso = 1.7 micrometers, d₉₈ = 8 micrometers (measured with Sedigraph), BET SSA = 4.1 m²/g ) which has been surface-treated with the hydrophobizing agent 02 in an amount of 0.8 wt.%, based on the total weight of the calcium carbonate-containing material.

Surface treatment was done in a Somakon MP-LB high shear mixer. The calcium carbonate powder was conditioned inside the mixer for 10 minutes at the desired temperature (120 °C, 600 rpm, scraper speed 75%), then the hydrophobizing agent 02 was added under the above mentioned mixing conditions, and treatment was done by continuing the mixing for 15 minutes. The surface-treated calcium carbonate was then left to cool down and was collected.

### 2.9 Surface-treated calcium carbonate-containing material CC4 (comparative)

The surface-treated calcium carbonate-containing material CC4 is a wet ground spray dried limestone from France (dso = 0.7 micrometers, d₉₈ = 2.9 micrometers (measured with Sedigraph) , BET SSA = 7.9 m²/g ) which has been surface-treated with the hydrophobizing agent 01.

### 2.10 Surface-treated calcium carbonate-containing material CC5 (according to the invention)

The surface-treated calcium carbonate-containing material CC5 is a wet ground spray dried limestone from France (dso = 0.7 micrometers, d₉₈ = 2.9 micrometers (measured with Sedigraph) , BET SSA = 7.9 m²/g ) which has been surface-treated with the hydrophobizing agent 02 in an amount of 1.25 wt.%, based on the total weight of the calcium carbonate-containing material.

Surface treatment was done in a Somakon MP-LB high shear mixer. The calcium carbonate powder was conditioned inside the mixer for 10 minutes at the desired temperature (120 °C, 600 rpm, scraper speed 75%), then the hydrophobizing agent 02 was added under the above mentioned mixing conditions, and treatment was done by continuing the mixing for 15 minutes. The surface-treated calcium carbonate was then left to cool down and was collected.

### 2.11 Surface-treated calcium carbonate-containing material CC6 (according to the invention)

The surface-treated calcium carbonate-containing material CC6 is a wet ground spray dried limestone from France (dso = 0.7 micrometers, d₉₈ = 2.9 micrometers (measured with Sedigraph) , BET SSA = 7.9 m²/g ) which has been surface-treated with the hydrophobizing agent 03 in an amount of 1.5 wt.%, based on the total weight of the calcium carbonate-containing material.

Surface treatment was done in a Somakon MP-LB high shear mixer. The calcium carbonate powder was conditioned inside the mixer for 10 minutes at the desired temperature (120 °C, 600 rpm, scraper speed 75%), then the hydrophobizing agent 03 was added under the above mentioned mixing conditions, and treatment was done by continuing the mixing for 15 minutes. The surface-treated calcium carbonate was then left to cool down and was collected.

### 2.13 Surface-treated calcium carbonate-containing material CC7 (according to the invention)

The surface-treated calcium carbonate-containing material CC7 is a wet ground spray dried marble from Italy (d₅₀ = 1.7 micrometers, d₉₈ = 6 micrometers (measured with Sedigraph) , BET SSA = 3.2 m²/g which has been surface-treated with the hydrophobizing agent 04 in an amount of 1.0 wt.%, based on the total weight of the calcium carbonate-containing material.

Surface treatment was done in a Somakon MP-LB high shear mixer. The calcium carbonate powder was conditioned inside the mixer for 10 minutes at the desired temperature (120 °C, 600 rpm, scraper speed 75%), then the hydrophobizing agent 04 was added under the above mentioned mixing conditions, and treatment was done by continuing the mixing for 15 minutes. The surface-treated calcium carbonate was then left to cool down and was collected.

### 2.13 Surface-treated calcium carbonate-containing material CC8 (according to the invention)

The surface-treated calcium carbonate-containing material CC8 is a wet ground spray dried limestone from France (dso = 0.7 micrometers, d₉₈ = 2.9 micrometers (measured with Sedigraph) , BET SSA = 7.9 m²/g ) which has been surface-treated with the hydrophobizing agent 04 in an amount of 1.0 wt.%, based on the total weight of the calcium carbonate-containing material.

Surface treatment was done in a Somakon MP-LB high shear mixer. The calcium carbonate powder was conditioned inside the mixer for 10 minutes at the desired temperature (120 °C, 600 rpm, scraper speed 75%), then the hydrophobizing agent 04 was added under the above mentioned mixing conditions, and treatment was done by continuing the mixing for 15 minutes. The surface-treated calcium carbonate was then left to cool down and was collected.

### 2.14 Titanium dioxide

The titanium dioxide used in the examples is the titanium dioxide Kronos 2230 which is a rutile pigment and commercially available from Kronos.

### 2.15 Additive

As an additive the antioxidant Irganox B900 is used, which is commercially available from BASF.

### 3. Results

### 3.1 Test trial 1: Polycarbonate compositions w/o titanium dioxide

Compounds CP-1 to CP-7 were produced on a twin-screw extruder 25:1 from Three-Tec GmbH (Extruder Type ZE12, die: 0.5 mm) with the following line settings:
- Extruder temperatures: 20 °C (feeding) - 250 °C / 250 °C / 250 °C / 250 °C
- Feeding speed: 11%
- Screw speed: 30 rpm
- Conveyor speed: 1.5 rpm
- Cut speed: 21 rpm

The polycarbonate resin was first ground into a powder form with a Rotor Beater Mill SR300 from Retsch using a 2 mm then 1mm sieves. The ground polycarbonate resin, the antioxidant additive and the (surface-treated) calcium carbonates were physically pre-mixed and fed together *via* the main feeder. The respective components were compounded and extruded to obtain compounds/compositions CP-1 to CP-7. Table 1 presents the composition of each compound.

**Table 1: preparation and composition of Compounds CP-1 to CP-7**

| Compound | Polycarbonate resin (wt.%) | Additive (wt%) | Filler material (wt%) |
|---|---|---|---|
| CP-1 (comparative) | PC Makrolon 2458 (99.8 wt%) | Irganox B900 (0.2 wt%) | / |
| CP-2 (comparative) | PC Makrolon 2458 (96.8 wt%) | Irganox B900 (0.2 wt%) | CC 1 (3 wt%) |
| CP-3 (comparative) | PC Makrolon 2458 (96.8 wt%) | Irganox B900 (0.2 wt%) | CC 2 (3 wt%) |
| CP-4 (inventive) | PC Makrolon 2458 (96.8 wt%) | Irganox B900 (0.2 wt%) | CC 3 (3 wt%) |
| CP-5 (comparative) | PC Makrolon 2458 (89.8 wt%) | Irganox B900 (0.2 wt%) | CC 1 (10 wt%) |
| CP-6 (comparative) | PC Makrolon 2458 (89.8 wt%) | Irganox B900 (0.2 wt%) | CC 2 (10 wt%) |
| CP-7 (inventive) | PC Makrolon 2458 (89.8 wt%) | Irganox B900 (0.2 wt%) | CC 3 (10 wt%) |

Rheological properties were studied *via* the melt flow rate of each compound determined as described herein above. Results are presented in Table 2.

**Table 2: Test trial 1 - Melt flow rate**

| | CP-1 (comp) | CP-2 (comp) | CP-3 (comp) | CP-4 (inv) | CP-5 (comp) | CP-6 (comp) | CP-7 (inv) |
|---|---|---|---|---|---|---|---|
| MFR (g/10min) | 9.7 | 22.3 | 15.8 | 10.8 | 56.2 | 21.2 | 15.5 |

As can be seen in Table 2, the use of an untreated calcium carbonate CC1 (cf. CP-2 and CP-5) leads to an increase of the melt flow rate value. It is believed that the increase in melt flow rate is due to degradation of the resin and incompatibility of calcium carbonate with polycarbonate. The use the surface-treated calcium carbonate-containing material CC3 (cf. CP-4 and CP-7) according to the invention allows for maintaining the melt flow rate of the unfilled polycarbonate resin, or at least shows a much reduced increase in melt flow.

Tensile and impact bars were made by using a Xplore IM12 injection moulder from Xplore Instruments B.V with pellets produced as described in Table 1 and injected with the settings indicated in Table 3.

**Table 3: Xplore IM12 conditions**

| | | |
|---|---|---|
| Melt temperature | 300 °C | |
| Mould temperature | 120 °C | |
| Melting time | 2 min | |
| Pressure + injection time | 8 bars | 15s |

The tensile samples were dog bones 1BA-type according to IS0527-1:2012 and results are presented in Table 4.

The dimension of the impact bars were the following ones: 80 mm x 10 mm x 4 mm. It should be noticed that it was impossible to make injected impact bars with CP-6, because of bubble formation and samples expansion, certainly due to the degradation of the fatty acid.
These samples were notched by using an Automatic NotchVis Plus from CEAST. The radius of the notch is 0.25 mm with a depth of 2 mm.

Impact tests were made according to ISO179-1eA (notched) and results are presented in Table 5.

**Table 4: Test trial 1 - Tensile properties summary**

| | CP-1 (comp) | CP-2 (comp) | CP-3 (comp) | CP-4 (inv) | CP-5 (comp) | CP-6 (comp) | CP-7 (inv) |
|---|---|---|---|---|---|---|---|
| Maximum strength (N/mm²) | 63.4 | 63.9 | 62.5 | 62.1 | 22.4 | 49.2 | 58.8 |
| Elongation at break (%) | 44 | 12 | 12 | 66 | 1 | 3 | 8 |

For the inventive polycarbonate compositions (CP-4 and CP-7) using the surface-treated calcium carbonate-containing material CC3 as filler, the maximum strength remains stable. In contrast thereto, the use of an untreated or fatty acid treated calcium carbonates CC1 and CC2 leads to a decrease of the maximum strength, especially at a filler amount of 10 wt.%. This is believed to be caused by the incompatibility and the poor adhesion of comparative calcium carbonate fillers CC1 and CC2 with the polycarbonate.

Furthermore, the elongation at break is improved as well for the inventive polycarbonate compositions.

**Table 5: Test trial 1 - Impact properties**

| | CP-1 (comp) | CP-2 (comp) | CP-3 (comp) | CP-4 (inv) | CP-5 (comp) | CP-6 (comp) | CP-7 (inv) |
|---|---|---|---|---|---|---|---|
| Impact strength (kJ/m²) | 8.2 | 3.2 | 6.6 | 9.2 | 1.9 | N/A | 10.9 |

Table 5 shows that the impact strength of the polycarbonate was improved for polycarbonate compositions CP-4 and CP-7 comprising the surface-treated calcium carbonate-containing material CC3, whereas a reduction of impact strength was observed when using comparative calcium carbonates CC1 and CC2.

**Table 6: Example 1 - CIE Lab values**

| | CP-2 (comp) | CP-3 (comp) | CP-4 (inv) | CP-5 (comp) | CP-6 (comp) | CP-7 (inv) |
|---|---|---|---|---|---|---|
| L* | 71.3 | 70.1 | 70.5 | 71.1 | 71.3 | 74.3 |
| a* | 0.21 | 0.01 | 0.17 | 0.16 | -0.05 | 0.18 |
| b* | 5.55 | 4.00 | 3.74 | 10.13 | 8.90 | 3.52 |

Table 6 shows the L*a*b* values. The yellowness is characterized by the b* value. Table 6 shows lower yellowness coloration with CP-4 and CP-7 (inventive examples) compared to the comparative examples. Lightness L* is also increased when using 10 wt.% of the surface-treated calcium carbonate-containing material CC3 in composition CP-7 compared to the comparative compositions CP-5 and CP-6.

### 3.2 Test trial 2: Polycarbonate compositions with titanium dioxide

Compounds CP-8 to CP-16 were produced on a twin-screw extruder 25:1 from Three Tec (Extruder Type ZE12, die: 0.5 mm) with the following line settings:
- Extruder temperatures: 20 °C (feeding) - 250 °C / 250 °C / 250 °C / 250 °C
- Feeding speed: 11%
- Screw speed: 30 rpm
- Conveyor speed: 1.5 rpm
- Cut speed: 21 rpm

The polycarboante resin was first ground into a powder form with a Rotor Beater Mill SR300 from Retsch using a 2 mm then 1mm sieves. The ground resin, the antioxidant additive, the titanium dioxide and the surface-treated calcium carbonate-containing materials were physically pre-mixed and fed together *via* the main feeder. The respective components were compounded and extruded to obtain compounds/compositions CP-8 to CP-16.

**Table 7: preparation and composition of Compounds CP-8 to CP-16**

| Sample | Polymer 1 (wt%) | Additional additive (wt%) | Titanium dioxide (wt%) | Filler material (wt%) |
|---|---|---|---|---|
| CP-8 (comparative) | PC Makrolon 2458 (99.8 wt%) | Irganox B900 (0.2 wt%) | / | / |
| CP-9 (comparative) | PC Makrolon 2458 (97.8 wt%) | Irganox B900 (0.2 wt%) | Kronos 2230 (2 wt%) | / |
| CP-10 (comparative) | PC Makrolon 2458 (94.8 wt%) | Irganox B900 (0.2 wt%) | Kronos 2230 (5 wt%) | / |
| CP-11 (comparative) | PC Makrolon 2458 (89.8 wt%) | Irganox B900 (0.2 wt%) | Kronos 2230 (10 wt%) | / |
| CP-12 (inventive) | PC Makrolon 2458 (94.8 wt%) | Irganox B900 (0.2 wt%) | Kronos 2230 (2 wt%) | CC 3 (3 wt%) |
| CP-13 (comparative) | PC Makrolon 2458 (94.8 wt%) | Irganox B900 (0.2 wt%) | Kronos 2230 (2 wt%) | CC 4 (3 wt%) |
| CP-14 (inventive) | PC Makrolon 2458 (94.8 wt%) | Irganox B900 (0.2 wt%) | Kronos 2230 (2 wt%) | CC 5 (3 wt%) |
| CP-15 (inventive) | PC Makrolon 2458 (94.8 wt%) | Irganox B900 (0.2 wt%) | Kronos 2230 (2 wt%) | CC 6 (3 wt%) |
| CP-16 (comparative) | PC Makrolon 2458 (89.8 wt%) | Irganox B900 (0.2 wt%) | Kronos 2230 (5 wt%) | CC 4 (5 wt%) |
| CP-17 (inventive) | PC Makrolon 2458 (89.8 wt%) | Irganox B900 (0.2 wt%) | Kronos 2230 (5 wt%) | CC 5 (5 wt%) |

Rheological properties were studied *via* the melt flow rate of each compound as described in the analytical methods and presented in Table 8.

**Table 8: Test trial 2 - Melt flow rate**

| | CP-8 (comp) | CP-9 (comp) | CP-10 (comp) | CP-11 (comp) | CP-12 (inv) |
|---|---|---|---|---|---|
| MFI (g/10min) | 10.4 | 12.6 | 12.1 | 12.5 | 11.0 |
| | CP-13 (comp) | CP-15 (inv) | CP-16 (comp) | CP-17 (inv) | |
| MFI (g/10min) | 15.8 | 13.8 | 12.7 | 10.4 | |

The results in table 8 show that using the surface-treated calcium carbonate-containing material CC5 or CC6 either does not lead to a increase of the melt flow rate compared with an unfilled polycarbonate composition (e.g. CP-17 vs CP-8) or leads to a reduction of the melt flow rate compared with a polycarbonate composition which is filled with a comparative calcium carbonate (e.g. CP-17 vs CP-16 or CP-15 vs CP-13).

Tensile and impact bars were made by using a Xplore IM12 injection moulder from Xplore Instruments B.V with pellets produced as described in Table 2 with the settings indicated in Table 9.

**Table 9: Xplore IM12 conditions**

| | | |
|---|---|---|
| Melt temperature | 300 °C | |
| Mould temperature | 120 °C | |
| Melting time | 2 min | |
| Pressure + injection time | 8 bars | 15s |

The tensile samples were dog bones 1BA-type according to IS0527-1:2012 and results are presented in Table 10. The dimensions of the impact bars are the following ones: 80 mm x 10 mm x 4 mm. These samples were notched by using an Automatic NotchVis Plus from CEAST. The radius of the notch is 0.25mm with a depth of 2mm. Impact tests were made according to ISO179-1eA (notched) and results are presented in Table 11.

**Table 10: Example 2 - Tensile properties summary**

| | CP-8 (comp) | CP-9 (comp) | CP-10 (comp) | CP-11 (comp) | CP-12 (inv) | CP-13 (comp) | CP-14 (inv) | CP-15 (inv) | CP-16 (comp) | CP-17 (inv) |
|---|---|---|---|---|---|---|---|---|---|---|
| Maximum strength (N/mm²) | 65.4 | 65.3 | 63.9 | 61.6 | 62.5 | 62.8 | 62.9 | 62.7 | 60.7 | 60.5 |
| Elongation at break (%) | 61 | 42 | 39 | 37 | 47 | 38 | 37 | 52 | 34 | 46 |

At low filler level (2 wt.% TiO₂ - 3 wt.% CaCO₃, CP-12 to CP-15) the elongation at break is maintained compared to CP-9 (2 wt.% TiO₂ filled), which means that calcium carbonate filler can be added without having a negative influence on the elongation at break. The inventive examples CP-12 and CP-15 show an improved elongation at break compared to the respective comparative example. At higher filler level (5 wt.% TiO₂ - 5 wt.% CaCO₃), inventive example CP-17 gives better elongation at break as comparative example CP-16 and even a better elongation at break compared to comparative example CP-11 (10 wt. % TiO₂ filled).

**Table 11: Example 2 - Impact properties**

| | CP-8 (comp) | CP-9 (comp) | CP-10 (comp) | CP-11 (comp) | CP-12 (inv) | CP-13 (comp) | CP-14 (inv) | CP-15 (inv) | CP-16 (comp) | CP-17 (inv) |
|---|---|---|---|---|---|---|---|---|---|---|
| Impact strength (kJ/m2) | 10.5 | 10.0 | 13.7 | 17.2 | 10.4 | 9.5 | 9.3 | 10.2 | 14.8 | 27.2 |

At low filler level (2 wt.% TiO₂ - 3 wt.% CaCO₃, CP-12 to CP-15) the impact strength is maintained compared to CP-9 (2 wt. % TiO₂ filled), which means that calcium carbonate can be added without having a negative influence on the impact properties. At higher filler level (5 wt.% TiO₂ - 5 wt.% CaCO₃), the inventive example CP-17 gives better impact strength compared to comparative example CP-16 and even better impact strength compared to CP-11 (10 wt.% TiO₂ filled).

## Claims

1. A polycarbonate composition comprising
a) a polycarbonate resin
b) a surface-treated calcium carbonate-containing material, wherein the surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof;
c) optionally titanium dioxide;
d) optionally one or more additives.

2. The polycarbonate composition according to claim 1, wherein the polycarbonate composition comprises the polycarbonate resin in an amount of at least 50 wt.%, preferably at least 75 wt.%, and more preferably at least 85 wt.%, based on the total weight of the polycarbonate composition, and/or
wherein the polycarbonate resin is a poly(bisphenol A carbonate), optionally having a melt flow rate according to ISO 1133 (300 °C/1.2 kg) in the range of 1 to 50 g/10 min.

3. The polycarbonate composition according to claim 1 or claim 2, wherein the polycarbonate composition comprises, based on the total weight of the polycarbonate composition:
a) at least 50 wt.% of the polycarbonate resin,
b) from 0.1 to 12 wt.% of the surface-treated calcium carbonate-containing material,
c) optionally from 0.1 to 10 wt.% of titanium dioxide, and
d) optionally from 0.1 to 10 wt.% of additives.

4. The polycarbonate composition according to any one of the preceding claims, wherein the polycarbonate composition comprises the surface-treated calcium carbonate-containing material in an amount in the range of 0.1 to 12 wt.%, preferably 0.5 to 9.0 wt.%, and more preferably 1.0 to 6.0 wt.%, based on the total weight of the composition.

5. The polycarbonate composition according to any one of the preceding claims, wherein the aliphatic-substituted succinic anhydrides are alkenyl mono-substituted succinic anhydrides, and preferably C₂-C₃₀-alkenyl mono-substituted succinic anhydrides.

6. The polycarbonate composition according to any one of the preceding claims, wherein the carboxylic acid- and/or anhydride-functional polysiloxanes have a structure according to Formula (I): 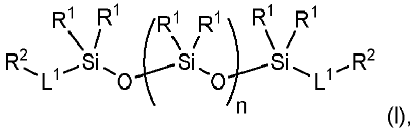 wherein
R¹ is each independently selected from hydrogen, optionally substituted alkyl groups and optionally substituted aryl groups,
R² is each independently selected from a carboxyl group and anhydride groups,
L¹ is a linking moiety,
m is an integer from 1 to 25, and
n is an integer from 1 to 1000.

7. The polycarbonate composition according to any one of the preceding claims, wherein the amount of the at least one hydrophobizing agent used for surface-treating the calcium carbonate-containing material is in the range of 0.1 to 10.0 wt.%, preferably 0.1 to 6.0 wt.%, more preferably 0.3 to 5.0 wt.%, and even more preferably 0.5 to 3.0 wt.%, based on the weight of the calcium carbonate-containing material, or
wherein the amount of the at least one hydrophobizing agent used for surface-treating the calcium carbonate-containing material is in the range of 0.1 to 0.4 wt.% / m² (BET specific surface area of calcium carbonate-containing material), based on the weight and the BET specific surface area of the calcium carbonate-containing material.

8. The polycarbonate composition according to any one of the preceding claims, wherein the surface-treated calcium carbonate-containing material has a moisture pick-up susceptibility of below 2.0 mg (H₂O) / g (material), and preferably below 1.2 mg (H₂O) / g (material), and/or
wherein the surface-treated calcium carbonate-containing material has a residual moisture content of at most 0.5 wt.%, preferably of at most 0.3 wt.%, as determined by TGA analysis.

9. The polycarbonate composition according to any one of the preceding claims, wherein the calcium carbonate-containing material has a weight-median particle size d₅₀ in the range of 0.1 to 15 micrometers, preferably 0.3 to 5 micrometers, and more preferably 0.5 to 3 micrometers, and/or
wherein the calcium carbonate-containing material has a weight-based top cut particle size d₉₈ in the range of 0.5 to 40 micrometers, preferably 1.0 to 20 micrometers, and more preferably 1.0 to 10 micrometers.

10. The polycarbonate composition according to any one of the preceding claims, wherein the calcium carbonate-containing material is selected from the group consisting of natural ground calcium carbonate, precipitated calcium carbonate, and mixtures thereof, preferably the calcium carbonate-containing material is a natural ground calcium carbonate, more preferably the natural ground calcium carbonate is selected from marble, limestone and mixtures thereof, and most preferably the natural ground calcium carbonate is marble.

11. The polycarbonate composition according to any one of the preceding claims, wherein the polycarbonate composition comprises titanium dioxide in an amount of 0.1 to 10 wt.%, and preferably 1 to 5 wt.%, based on the total weight of the polycarbonate composition, and optionally wherein the titanium dioxide is a rutile-type titanium dioxide which is optionally surface-treated with one or more aluminium compounds and/or one or more polysiloxane compounds.

12. An article comprising the polycarbonate composition according to any one of claims 1 to 11.

13. A process for preparing a polycarbonate composition according to any of claims 1 to 11, wherein the process comprises the steps of:
i) surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof, to obtain a surface-treated calcium carbonate-containing material;
ii) compounding the surface-treated calcium carbonate-containing material with a polycarbonate resin, and optionally with one or more additives and/or titanium dioxide, to obtain a polycarbonate composition,
iii) extruding the polycarbonate composition.

14. Use of a surface-treated calcium carbonate-containing material as a filler for a polycarbonate composition,
wherein the surface-treated calcium carbonate-containing material is obtained by surface-treating a calcium carbonate-containing material with at least one hydrophobizing agent selected from the group consisting of aliphatic-substituted succinic anhydrides, carboxylic acid- and/or anhydride-functional polysiloxanes, and mixtures thereof.

15. The use according to claim 14, wherein the surface-treated calcium carbonate is used for improving the mechanical and/or optical properties of the polycarbonate composition,
and preferably is used for one or more of the following :
increasing the maximum strength according to ISO 527,
increasing the elongation at break according to ISO 527,
increasing the impact resistance according to ISO 179,
reducing the melt flow rate according to ISO 1133 (measured at 260°C with a load of 2.16 kg) decreasing the b* value according to DIN 6174, and
increasing the L* value according to DIN 6174,
when compared to the use of a calcium carbonate-containing material which is not surface-treated, under otherwise identical conditions, and/or when compared to the use of a surface-treated calcium carbonate-containing material which is obtained by surface-treating the calcium carbonate-containing material with a hydrophobizing agent other than the at least one hydrophobizing agent as defined in claim 14, under otherwise identical conditions.

16. A surface-treated calcium carbonate-containing material, wherein the surface-treated calcium carbonate-containing material is obtained by surface-treating a calcium carbonate-containing material with at least one hydrophobizing agent selected from the group consisting of carboxylic acid- and/or anhydride-functional polysiloxanes.

17. The surface-treated calcium carbonate-containing material according to claim 16, wherein the carboxylic acid- and/or anhydride-functional polysiloxanes are carboxylic acid-functional polysiloxanes selected from the group of carboxylalkyl-terminated polysiloxanes, preferably from the group of carboxyl-C₁-C₂₀-alkyl-terminated polysiloxanes, and more preferably from the group of carboxyl-C₁-C₂₀-alkyl-terminated poly(dimethylsiloxanes) or
wherein the carboxylic acid- and/or anhydride-functional polysiloxanes are anhydride-functional polysiloxanes selected from the group of succinic anhydride alkyl-terminated polysiloxanes, preferably from the group of succinic anhydride C₁-C₂₀-alkyl-terminated polysiloxanes, and more preferably from the group of succinic anhydride C₁-C₂₀-alkyl-terminated poly(dimethylsiloxanes).

18. The surface-treated calcium carbonate-containing material according to claim 16, wherein the the carboxylic acid- and/or anhydride-functional polysiloxanes have a structure according to Formula (I): 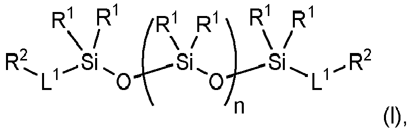 wherein
R¹ is each independently selected from hydrogen, optionally substituted alkyl groups and optionally substituted aryl groups,
R² is each independently selected from a carboxyl group and anhydride groups,
L¹ is a linking moiety,
m is an integer from 1 to 25, and
n is an integer from 1 to 1000, and
optionally wherein the carboxylic acid- and/or anhydride-functional polysiloxanes have a structure according to Formula (II): 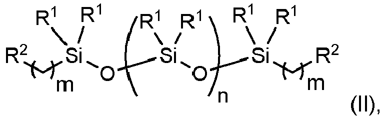 wherein
R¹ is each independently selected from hydrogen, optionally substituted alkyl groups and optionally substituted aryl groups,
R² is each independently selected from a carboxyl group and anhydride groups,
m is an integer from 1 to 25, and
n is an integer from 1 to 1000.
